# EUROPÄISCHE PATENTSCHRIFT

(11) **EP 3 350 474 B1**
(45) Veröffentlichungstag und Bekanntmachung des Hinweises auf die Patenterteilung: **10.11.2021**
(21) Anmeldenummer: 16765969.7
(22) Anmeldetag: 13.09.2016
(51) Int. Cl.: F16G 3/00

(54) **MULTIFUNKTIONSWERKZEUG MIT EINER VORRICHTUNG ZUM BETÄTIGEN EINES KETTENSCHNELLVERSCHLUSSES**
MULTIFUNCTIONAL TOOL HAVING AN APPARATUS FOR ACTIVATING A QUICK CHAIN LINK
OUTIL MULTIFONCTION MUNI D'UN DISPOSITIF SERVANT À ACTIONNER UNE ATTACHE RAPIDE POUR CHAÎNE

(30) Priorität: 18.09.2015 WO PCT/EP2015/071492
(43) Veröffentlichungstag der Anmeldung: 25.07.2018
(73) Patentinhaber: QCS Quality Consult Service GmbH, 9058 Brülisau (CH)
(72) Erfinder: LAUER, Swen, 82467 Garmisch-Partenkirchen (DE)
(74) Vertreter: Zimmermann, Tankred Klaus
(86) Internationale Anmeldenummer: PCT/EP2016/071576
(87) Internationale Veröffentlichungsnummer: WO 2017/046093

(56) Entgegenhaltungen:
- DE-A1-102013 100 027
- US-A- 4 394 810
- US-A- 4 429 525
- US-A- 5 140 736

## Beschreibung

Die Erfindung betrifft ein tragbares Multifunktionswerkzeug mit einem Werkzeugfunktionselement zum Betätigen von Kettenschnellverschlüssen mit den Merkmalen von Anspruch 1.

Heutzutage sind bei Mobilen bzw. Fahrzeugen unterschiedliche Kraftübertragungsmittel zum Übertragen einer Antriebskraft an die anzutreibenden Räder bekannt. Beispielsweise kann die Übertragung der Antriebskraft mittels Ketten bewerkstelligt werden. So ist es beispielsweise bei motorisch betriebenen Fahrzeugen bekannt, mittels einer Antriebskette die Kraft vom Motor bzw. einem nachgelagerten Getriebe zu den anzutreibenden Rädern zu leiten. Bei klassischen Fahrrädern ohne Hilfsmotor beispielsweise wird die Antriebskette genutzt, um die vom Fahrer bereitgestellte Muskelkraft von der Tretkurbel zu dem anzutreibenden Rad zu leiten.

Derartige Ketten bzw. Antriebsketten sind heutzutage vornehmlich als sogenannte Rollenketten oder Bolzenketten ausgebildet. Diese Ketten bestehen in der Regel aus mehreren Kettengliedern, wobei jedes Kettenglied wiederum zwei gegenüberliegend angeordnete Laschen aufweist. Die beiden Laschen eines Kettenglieds sind mittels zwischen den Laschen angeordneter Kettenlaschenverbindungsmitteln, wie z.B. Niete, Bolzen und/oder Rollen, miteinander verbunden. Eine solche Kette ist beispielsweise aus der EP 1 245 862 A2 bekannt.

Benachbarte Kettenglieder einer Kette weisen abwechselnd sogenannte Innenlaschen und Außenlaschen auf, wobei die beiden Innenlaschen eines Kettenglieds einen geringeren Abstand zueinander aufweisen als zwei Außenlaschen eines benachbarten Kettenglieds.

Die Abmessung der Innenlaschen ist derart ausgelegt, dass die Außenflächen der beiden Innenlaschen eines Kettenglieds an die Innenflächen der beiden Außenlaschen des jeweils benachbarten Kettenglieds angrenzen. Die beiden Innenlaschen eines Kettenglieds werden sozusagen in die beiden Außenlaschen des jeweils benachbarten Kettenglieds eingeführt. Jede Innenlasche sowie jede Außenlasche weist an ihren beiden in Zugrichtung außen liegenden Enden jeweils ein Loch auf. Beim Einführen der Innenlaschen in die Außenlaschen werden die Enden der Laschen so zueinander ausgerichtet, dass die Löcher einer Innenlasche mit den Löchern einer benachbarten Außenlasche fluchten. Durch diese in einer Flucht liegenden Löcher werden Bolzen beziehungsweise Niete gedrückt, um die Laschen, und somit die einzelnen Kettenglieder, miteinander zu verbinden. Eine Presspassung zwischen den Nieten und den Löchern sorgt für die Befestigung. Um die Niete herum können ferner Buchsen oder Kettenrollen angeordnet sein. Auf diese Weise wird eine Endloskette in Form einer Bolzen- beziehungsweise Rollenkette hergestellt.

Derartige Ketten sind sehr stabil und ermöglichen hohe Zugkräfte. Die Handhabung bei einem Austausch einzelner Kettenglieder ist jedoch aufwendig und kompliziert. Hierbei müssen die Niete eines auszutauschenden Kettenglieds, oder eines aus mehreren Kettengliedern bestehenden auszutauschenden Segments, durch Herausdrücken vollständig entfernt werden. Anschließend müssen neue Niete eingesetzt und wieder eingedrückt und verpresst werden. Dies geschieht in der Regel mit einem speziell dafür vorgesehenen Werkzeug.

Beispielsweise aus dem Fahrradbereich sind derartige Spezialwerkzeuge für den mobilen Einsatz bekannt. Dabei handelt es sich um sogenannte Kettennieter, die als Bestandteil eines mehrteiligen Multifunktionswerkzeugs mit kompakter Abmessung erhältlich sind. Ein solcher Kettennieter weist einen Aufnahmeabschnitt auf, in den zwei benachbarte Kettenglieder einer Kette eingelegt werden. Der Kettennieter weist außerdem einen sogenannten Kettennietdrückstift auf, der orthogonal zu der eingelegten Kette, beziehungsweise quer zur Kettenlängsrichtung, ausgerichtet ist. Zum Trennen beziehungsweise Öffnen einer Kette wird der Kettennietdrückstift auf den zu entfernenden Niet ausgerichtet und translatorisch auf diesen Niet zubewegt. Durch eine Fortsetzung der Translationsbewegung drückt der Kettennietdrückstift den Niet aus den Kettenlaschen heraus.

Derartige Nietbefestigungen einer Kette sind zwar sehr stabil. Das Lösen einer solchen Nietverbindung einer Kette ist jedoch zeitaufwändig und teilweise umständlich, da die Niete relativ klein und somit teils umständlich handhabbar sind.

Um das Trennen und Verbinden einzelner Glieder einer Kette zu erleichtern, sind sogenannte, auch als Kettenschloss bezeichnete, Kettenschnellverschlüsse bekannt. Ein solches Kettenschloss ist beispielsweise aus der EP 1 816 372 A2 bekannt und exemplarisch in den Figuren 10, 11 und 12 gezeigt. Der Kettenschnellverschluss 1000 weist zwei komplementäre Außenlaschen 1001A, 1002A mit je einem fest verbundenen Niet 1001B, 1002B auf. Der Niet 1001B steht von der Innenseite 1003 der jeweiligen Außenlasche 1001A hervor und weist an seinem der Außenlasche 1001A gegenüberliegenden freien Ende 1005 einen Abschnitt 1006 mit reduziertem Durchmesser auf.

Der feste Niet 1001B ist an einem in Zugrichtung außenliegenden Ende 1007 der Außenlasche 1001A angeordnet. Auf dem gegenüberliegenden in Zugrichtung außenliegenden Ende 1008 weist die Außenlasche 1001A ein Langloch 1009 auf. Auf der dem festen Niet 1001B zugewandten Seite 1011 des Langlochs 1009 weist dieses einen Abschnitt 1012 mit vergrößertem Durchmesser auf.

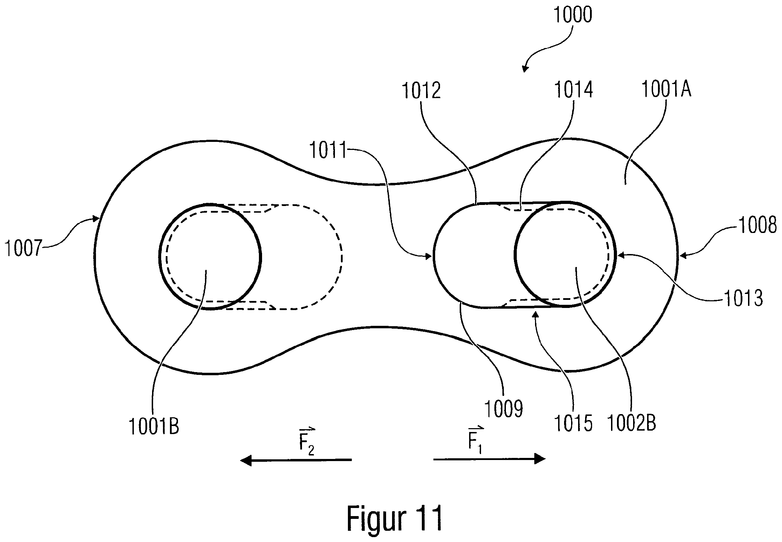

Um eine Kette mit dem Kettenschnellverschluss 1000 zu verbinden, werden die Niete 1001B, 1002B der beiden Kettenschnellverschluss-Außenlaschen 1001A, 1002A in Löcher zweier Innenlaschen eines (hier nicht dargestellten) jeweils benachbarten Kettenglieds gesteckt. Das jeweilige durch die Innenlaschenglieder hindurchtretende Ende 1005 der Niete 1001B, 1002B der beiden Kettenschnellverschluss-Außenlaschen 1001A, 1002A wird durch den Abschnitt 1012 mit vergrößertem Durchmesser der jeweils gegenüberliegenden komplementären Kettenschnellverschluss-Außenlasche 1001A, 1002A geführt. Anschließend wird die (hier nicht dargestellte) Kette in entgegengesetzte Richtungen F₁, F₂ (Figur 11) auf Zug belastet.

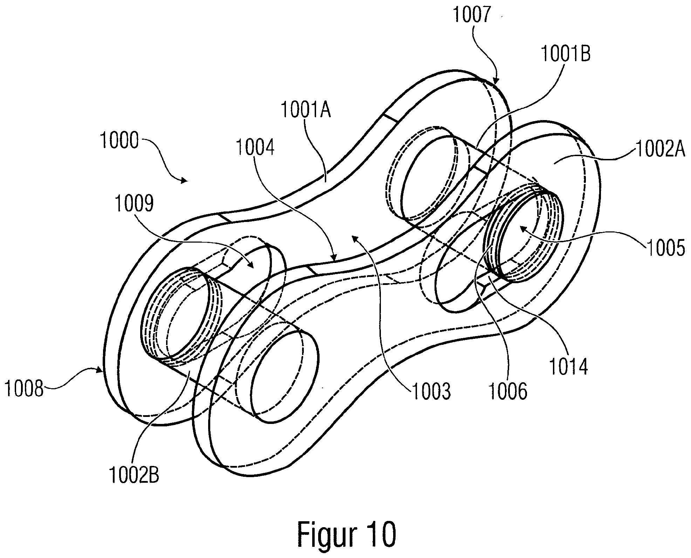

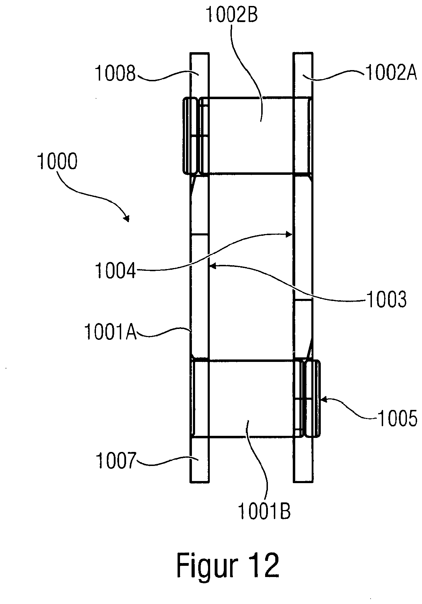

Durch die ausgeübte Zugkraft F₁, F₂ rutscht der Abschnitt 1005 mit reduziertem Durchmesser des jeweiligen Niets 1001B zu der dem festen Niet 1001B abgewandten Seite 1013 des Langlochs 1009 und verkeilt sich dort aufgrund einer Presspassung in einem in dem Langloch 1009 ausgebildeten Abschnitt 1014 mit reduziertem Durchmesser. So ist der Kettenschnellverschluss 1000 in der in den Figuren 10, 11, 12 gezeigten Stellung fixiert und die (hier nicht dargestellte) Kette ist fest verschlossen. Es kann somit also auf das Vernieten einzelner Kettenglieder verzichtet werden.

Zum Auftrennen einer mit einem Kettenschnellverschluss verschlossenen Kette gibt es wiederum spezielles Werkzeug. Hierfür sind sogenannte Kettenzangen bekannt. Die vorderen Enden einer Kettenzange werden in die Innenlaschen der dem Kettenschnellverschluss benachbarten Kettenglieder eingeführt und kommen mit den fixierten Nieten des Kettenschnellverschlusses zur Anlage. Durch Betätigen der Kettenzange schließen sich die vorderen Enden der Zange auf bekannte Weise. Die im Kettenschnellverschluss fixierten Niete werden somit zueinander gedrückt und rutschen in dem Langloch entlang in Richtung des Abschnitts mit dem größeren Durchmesser. Dort angekommen können die Niete durch laterales Herausziehen der komplementären Kettenschnellverschluss-Laschen entfernt werden. Der Kettenschnellverschluss wird so geöffnet und die Kette kann aufgetrennt werden.

Derartige Kettenzangen sind einfache Mittel zum Trennen und Öffnen von Ketten, die mit einem Kettenschnellverschluss verschlossen sind. Im Gegensatz zu dem zuvor beschriebenen Kettennieter führen die beiden Zangenhälften eine Rotationsbewegung um das gemeinsame Gelenk der Zange aus. Es muss daher ein Hebelarm bereitgestellt werden, um die benötigte Kraft zum Lösen eines Kettenschnellverschlusses aufzubringen. Aus diesem Grund weisen Zangen relativ lange Griffe auf. Die Kettenzange ist daher, im Vergleich zu dem zuvor erwähnten mobilen Kettennieter mit kompakter Abmessung, verhältnismäßig groß und unhandlich.

Ein weiteres aus dem Stand der Technik bekanntes tragbares Multifunktionswerkzeug ist in der US4394810A offenbart. Dieses Werkzeug umfasst ein Werkzeugfunktionselement mit ein Paar Kraftausübungsmitteln, die relativ zueinander translatorisch bewegbar sind. Darüber hinaus offenbart dieses Dokument einen Drückstift zum Öffnen einer Laschenkette.

Es ist eine Aufgabe der vorliegenden Erfindung, Vorrichtungen zum Öffnen eines Kettenschnellverschlusses dahingehend zu verbessern, dass diese einfach handhabbar sind und dabei gleichzeitig eine kompakte Größe aufweisen.

Diese Aufgabe wird erfindungsgemäß durch ein tragbares Multifunktionswerkzeug mit einem Werkzeugfunktionselement zum Öffnen eines Kettenschnellverschlusses mit den Merkmalen von Anspruch 1 gelöst.

Das erfindungsgemäße Multifunktionswerkzeug weist einen Griffabschnitt und einen Werkzeugaufnahmeabschnitt auf, an dem ein Werkzeugfunktionselement angeordnet ist. Das Werkzeugfunktionselement ist ausgebildet, um einen Kettenschnellverschluss zu betätigen, das heißt zu öffnen und/oder zu schließen, wobei der Kettenschnellverschluss zwei Kettenlaschen und zwei Kettenlaschenverbindungsmittel aufweist. Das erfindungsgemäße Multifunktionswerkzeug eignet sich außerdem zum Öffnen und/oder Schließen einer mit einem derartigen Kettenschnellverschluss verschlossenen oder zu verschließenden Kette. Der Kettenschnellverschluss ist betätigbar, indem die Kettenlaschenverbindungsmittel relativ zueinander bewegt werden. Innerhalb einer Kette ist der Kettenschnellverschluss ein Kettenglied dieser Kette. Das erste Kraftausübungsmittel ist dazu ausgebildet, um eine Kraft auf das erste Kettenlaschenverbindungsmittel des Kettenschnellverschlusses auszuüben, und das zweite Kraftausübungsmittel ist dazu ausgebildet, um eine Kraft auf das zweite Kettenlaschenverbindungsmittel des Kettenschnellverschlusses auszuüben. Erfindungsgemäß sind die beiden Kraftausübungsmittel relativ zueinander translatorisch bewegbar. Anhand dieser Translationsbewegung können die jeweiligen Kräfte mittels der Kraftausübungsmittel auf die jeweiligen Kettenlaschenverbindungsmittel übertragen und darauf ausgeübt werden. Aufgrund dieser ausgeübten Kraft können die in der Regel fest mit einer Kettenlasche verbundenen Niete des Kettenschnellverschlusses aus ihrer in der jeweils gegenüberliegenden Kettenlasche vorgesehenen Presspassung herausgeschoben beziehungsweise in diese hineingeschoben werden und das Kettenschloss beziehungsweise die gesamte Kette können somit geöffnet beziehungsweise geschlossen werden. Aufgrund der erfindungsgemäßen translatorischen Relativbewegung der beiden Kraftausübungsmittel kann bei dem erfindungsgemäßen Multifunktionswerkzeug auf eine, wie bei Kettenzangen übliche, Rotationsbewegung verzichtet werden. Das erfindungsgemäße Multifunktionswerkzeug benötigt daher keine, wie bei Kettenzangen üblich, langen Hebelarme als Betätigungsvorrichtung. Das erfindungsgemäße Multifunktionswerkzeug kann daher kompakte Abmessungen aufweisen. Eine Translationsbewegung der beiden Kraftausübungsmittel relativ zueinander kann auf einfache Weise, beispielsweise durch einfaches Verschieben der beiden Kraftausübungsmittel, erfolgen. Die Handhabung des erfindungsgemäßen Multifunktionswerkzeugs bzw. des daran angeordneten Werkzeugfunktionselements kann somit einfach und intuitiv erfolgen. Erfindungsgemäß weist das Werkzeugfunktionselement ferner eine Linearführungseinrichtung mit einem stationären ersten Linearführungselement und einem darin beweglich angeordneten zweiten Linearführungselement auf. Dabei ist lediglich eines der beiden Kraftausübungsmittel auf dem beweglichen zweiten Linearführungselement angeordnet. Es gibt bekannte Kettenspanner, bei denen beide Kraftausübungsmittel auf einem Linearführungselement (z.B. einem Gewindebolzen) angeordnet sind. Im Vergleich zu diesen bekannten Kettenspannern kann das zweite Linearführungselement bei dem erfindungsgemäßen Werkzeugfunktionselement jedoch wesentlich kürzer ausgeführt werden, da es lediglich eines der beiden Kraftausübungsmittel aufnehmen muss. Dadurch kann das erfindungsgemäße Multifunktionswerkzeug wesentlich kompakter ausgeführt sein als bekannte Kettenspanner.

Gemäß eines Ausführungsbeispiels kann das eine der beiden Kraftausübungsmittel bewegungsgekoppelt an dem zweiten Linearführungselement angeordnet sein, sodass sich das zweite Linearführungselement und das daran angeordnete Kraftausübungsmittel gemeinsam in dieselbe Richtung bewegen. Unter einer gemeinsamen Bewegung ist zu verstehen, dass das zweite Linearführungselement und das daran angeordnete Kraftausübungsmittel dieselbe Bewegung in dieselbe Richtung mit derselben Geschwindigkeit ausführen. Dies unterscheidet die vorliegende Erfindung weiterhin von bekannten Kettenspannern, bei denen eine Rotation des Linearführungselements (Gewindebolzen) eine Translationsbewegung der beiden auf dem Gewindebolzen laufenden Kraftausübungsmittel bewirkt. Bei der Erfindung hingegen wird bei einer translatorischen Bewegung des zweiten Linearführungselements auch das daran angeordnete Kraftausübungsmittel auf dieselbe Weise translatorisch bewegt. Anders ausgedrückt, bewegen sich bei bekannten Kettenspannern die auf dem Gewindebolzen angeordneten Kraftausübungsmittel bei einer Rotation des Gewindebolzens auf dem Gewindebolzen hin und her, d.h. die Kraftausübungsmittel bewegen sich translatorisch relativ zu dem Linearführungselement. Bei der Erfindung hingegen läuft das auf dem Linearführungselement angeordnete Kraftausübungsmittel nicht auf dem Linearführungselement hin und her, d.h. das Kraftausübungsmittel bewegt sich nicht translatorisch relativ zu dem Linearführungselement. Dies ist auch unter dem Begriff "bewegungsgekoppelt" zu verstehen, d.h. es findet keine translatorische Relativbewegung zwischen dem Linearführungselement und dem daran angeordneten Kraftausübungsmittel statt.

Gemäß eines weiteren Ausführungsbeispiels kann sich das zweite Linearführungselement und das daran angeordnete Kraftausübungsmittel gemeinsam auf das jeweils andere Kraftausübungsmittel zu bewegen. Da lediglich eines der beiden Kraftausübungsmittel auf dem zweiten Linearführungselement angeordnet ist, kann das andere der beiden Kraftausübungsmittel beispielsweise stationär, d.h. ohne Bewegung relativ zu dem Werkzeugfunktionselement, an selbigem angeordnet sein. Das zweite Linearführungselement und das daran angeordnete Kraftausübungsmittel hingegen sind beweglich relativ zu dem Werkzeugfunktionselement an selbigem angeordnet.

Es ist denkbar, dass das zweite Linearführungselement in eine erste Richtung bewegbar ist, um den Kettenschnellverschluss zu öffnen, und dass das an dem zweiten Linearführungselement angeordnete Kraftausübungsmittel in dieser ersten Bewegungsrichtung vor dem ersten Linearführungselement angeordnet ist. Diese Anordnung trägt ebenfalls dazu bei, die Länge des zweiten Linearführungselements gegenüber bekannten Vorrichtungen zu verkürze, um somit ein kompaktes Multifunktionswerkzeug zu erhalten.

Es ist vorstellbar, dass das Werkzeugfunktionselement einen stationären Lagerabschnitt aufweist, an dem das zweite Kraftausübungsmittel gelagert ist, wobei der Lagerabschnitt von dem ersten Linearführungselement beabstandet und diesem entlang der Bewegungsrichtung des zweiten Linearführungselements gegenüberliegend angeordnet ist. Wie bereits erwähnt, ist unter einem stationären Lagerabschnitt ein Lagerabschnitt zu verstehen, der keine Bewegung relativ zu dem Werkzeugfunktionselement aufweist. An diesem stationären Lagerabschnitt ist das jeweils andere der beiden Kraftausübungsmittel angeordnet. Das heißt, das an dem beweglichen zweiten Linearführungselement angeordnete Kraftausübungsmittel bewegt sich relativ zu dem an dem stationären ersten Linearführungselement angeordneten Kraftausübungsmittel.

Es ist außerdem denkbar, dass das zweite Linearführungselement einen Gewindeabschnitt aufweist, der sich durch das erste Linearführungselement und nicht durch den stationären Lagerabschnitt hindurch erstreckt. Das erste Linearführungselement kann ein zu dem Gewindeabschnitt des zweiten Linearführungselements komplementäres Innengewinde aufweisen. Somit wandelt das Gewinde eine Rotation des zweiten Linearführungselements in eine Translationsbewegung des zweiten Linearführungselements relativ zu dem ersten Linearführungselement um. Der Gewindeabschnitt des zweiten Linearführungselements erstreckt sich hierbei allerdings nicht durch den gegenüberliegend angeordneten Lagerabschnitt, an dem das andere der beiden Kraftausübungsmittel angeordnet ist. Das heißt, das jeweils andere der beiden Kraftausübungsmittel ist an dem Lagerabschnitt angeordnet und nicht an dem zweiten Linearführungselement.

Gemäß eines denkbaren Ausführungsbeispiels können das stationäre erste Linearführungselement und der stationäre Lagerabschnitt einstückig ausgebildet sein. In anderen Worten können sowohl das erste Linearführungselement als auch der Lagerabschnitt stationär an dem Werkzeugfunktionselement angeordnet sein. Sowohl das erste Linearführungselement als auch der Lagerabschnitt können also einstückig mit dem Werkzeugfunktionselement ausgebildet sein.

Es ist vorstellbar, dass zwischen dem stationären ersten Linearführungselement und dem stationären Lagerabschnitt ein Führungsabschnitt ausgebildet ist, der eine erste Lauffläche aufweist, und dass das an dem zweiten Linearführungselement angeordnete Kraftausübungsmittel eine dazu komplementäre zweite Lauffläche aufweist, wobei die beiden Laufflächen das Kraftausübungsmittel bei einer Linearbewegung gegen eine Rotation abstützen. Die beiden Laufflächen können beispielsweise als planparallele Flächen ausgebildet sein, sodass diese Flächen eine Rotation bzw. ein Verkippen des an dem zweiten Linearführungselement angeordneten Kraftausübungsmittels orthogonal zu seiner Linearbewegungsrichtung verhindern. Gemäß der vorliegenden Erfindung weist zumindest eines der beiden Kraftausübungsmittel einen Aufnahmeabschnitt zum Aufnehmen des Kettenschnellverschlusses auf, wobei der Aufnahmeabschnitt ausgebildet ist, um ein Verkippen des Kettenschnellverschlusses entlang der Kettenlängsachse zu vermeiden. So kann der Kettenschnellverschluss in dem Aufnahmeabschnitt gelagert beziehungsweise von diesem festgehalten werden, so dass das Öffnen und/oder Schließen des Kettenschnellverschlusses vereinfacht wird. Wenn der Kettenschnellverschluss in einer Kette angeordnet ist, kann ein solcher Aufnahmeabschnitt auch dazu dienen, benachbarte Kettenglieder zu lagern. Der Aufnahmeabschnitt kann die Kette so beispielsweise gegen ein Verdrehen, d.h. gegen eine in Kettenlängsrichtung wirkende Torsionskraft bzw. Rotation, abstützen. Der Ein- und/oder Ausbau eines Kettenschnellverschlusses wird somit vereinfacht.

Der Aufnahmeabschnitt weist einen Eingriffsabschnitt auf, der ausgebildet ist, um zwischen zwei Kettenlaschen eines dem Kettenschnellverschluss jeweils benachbarten Kettenglieds einzugreifen, wenn der Kettenschnellverschluss in einer Kette angeordnet ist. Beispielsweise können beide Kraftausübungsmittel je einen Aufnahmeabschnitt mit einem derartigen Eingriffsabschnitt aufweisen. Dabei kann jeder Eingriffsabschnitt in den zwischen den beiden Laschen eines dem Kettenschnellverschluss benachbarten Kettenglieds gebildeten Zwischenraum eingreifen. Dabei können die lateralen Abmessungen des jeweiligen Eingriffsabschnitts etwa mit dem Abstand der beiden Kettenlaschen, d.h. mit den Abmessungen des jeweiligen Kettenlaschen-Zwischenraums, des jeweiligen Kettenglieds korrespondieren, so dass zwischen dem Eingriffsabschnitt und dem Kettenlaschen-Zwischenraum des Kettenglieds eine Form- bzw. Spielpassung besteht. Somit könnte der Eingriffsabschnitt etwa passgenau in den Kettenlaschen-Zwischenraum eines benachbarten Kettenglieds eingreifen. So können die benachbarten Kettenglieder einfach an einem erfindungsgemäßen Werkzeugfunktionselement angebracht werden, um den Ein- und/oder Ausbau des zwischen diesen Kettengliedern angeordneten Kettenschnellverschlusses zu erleichtern.

Hierbei ist es denkbar, dass der Aufnahmeabschnitt und/oder der Eingriffsabschnitt eine orthogonal zur Linearbewegungsrichtung zu bemessende Dicke zwischen 1 mm und 2 mm aufweisen. Diese Dicke hat sich als besonders vorteilhaft herausgestellt, um insbesondere Fahrradketten mit dem erfindungsgemäßen Multifunktionswerkzeug zu bearbeiten. Die angegebene Dicke zwischen 1 mm und 2 mm passt gut zwischen die Innenlaschen einer Fahrradkette und bietet dabei genügend Stabilität, um einen Kettenschnellverschluss einer Fahrradkette zu betätigen.

Es wäre auch denkbar, dass der Aufnahmeabschnitt einen Kontaktabschnitt aufweist, der mit einem Kettenlaschenverbindungsmittel eines Kettenschnellverschlusses in Kontakt bringbar ist, wobei der Kontaktabschnitt einen Radius aufweist, der im Wesentlichen dem Radius des Kettenlaschenverbindungsmittels entspricht. Der Kontaktabschnitt kann also beispielsweise eine zu dem Kettenlaschenverbindungsmittel komplementäre Form aufweisen. Handelt es sich beispielsweise bei dem Kettenlaschenverbindungsmittel um einen runden Niet oder Bolzen, der darüber hinaus auch von einer runden Kettenrolle umgeben sein kann, so kann der Kontaktabschnitt ebenfalls eine runde Form aufweisen, deren Radius etwa dem Radius des Kettenlaschenverbindungsmittels entspricht. Vorteilhafter Weise kann der Radius des Kontaktabschnitts größer sein als der Radius des Kettenlaschenverbindungsmittels. So passt das Kettenlaschenverbindungsmittel sozusagen in den Kontaktabschnitt hinein und kann von diesem sicher aufgenommen und gehalten beziehungsweise gelagert werden. Dies ermöglicht eine sichere Führung des jeweiligen Kettenlaschenverbindungsmittels beim Ausführen der Translationsbewegung beziehungsweise beim Ausüben der Kraft auf das Kettenlaschenverbindungsmittel mittels der Kraftausübungsmittel.

Hierbei ist es denkbar, dass der Radius zwischen 3,5 mm und 4,0 mm, vorzugsweise zwischen 3,7 mm und 3,9 mm, und weiter bevorzugt 3,8 mm beträgt. Diese Radien entsprechen in etwa den Radien von bei Fahrradketten verwendeten Kettenrollen. Somit finden Kettenrollen von Fahrradketten guten Halt in den Kontaktabschnitten der Kraftausübungsmittel.

Es ist vorstellbar, dass der Werkzeugaufnahmeabschnitt einen Bolzen aufweist, der sich quer, insbesondere senkrecht, zu einer Haupterstreckungsrichtung des Griffabschnitts erstreckt, wobei das mindestens eine Werkzeugfunktionselement an diesem Bolzen angeordnet ist. Mittels eines solchen Bolzens kann eine einfache Möglichkeit zur Befestigung des erfindungsgemäßen Werkzeugfunktionselements an den Griffabschnitten des Multifunktionswerkzeugs realisiert werden. Die Anordnung des Bolzens quer zu der Haupterstreckungsrichtung des Griffabschnitts sorgt außerdem für ein kompaktes Baumaß des Multifunktionswerkzeugs. Die Haupterstreckungsrichtung des Griffabschnitts ist die Erstreckungsrichtung, in die sich der von einem Nutzer zu umgreifende Griffabschnitt hauptsächlich erstreckt.

Gemäß einer denkbaren Ausführungsform des erfindungsgemäßen Multifunktionswerkzeugs kann das mindestens eine Werkzeugfunktionselement einen Anbringungsabschnitt aufweisen, mittels dem das Werkzeugfunktionselement an dem Bolzen angebracht ist, wobei der Anbringungsabschnitt eine Öffnung aufweist, durch die der Bolzen durchführbar ist. Somit kann eine einfache Möglichkeit zur Anbringung des Werkzeugfunktionselements an dem erfindungsgemäßen Multifunktionswerkzeug gewährleistet werden. Das Werkzeugfunktionselement wird sozusagen an dem Bolzen aufgefädelt und mittels des Bolzens mit dem Griffabschnitt verbunden.

Es ist denkbar, dass das mindestens eine Werkzeugfunktionselement drehbar an dem Werkzeugaufnahmeabschnitt angeordnet ist. Somit kann das Werkzeugfunktionselement beispielsweise bei Nichtgebrauch eingeklappt werden, was wiederum einem kompakten Baumaß des erfindungsgemäßen Multifunktionswerkzeugs förderlich ist.

Es ist vorstellbar, dass der Werkzeugaufnahmeabschnitt zweigeteilt ist und der Anbringungsabschnitt des mindestens einen Werkzeugfunktionselements zwischen den beiden Teilen des Werkzeugaufnahmeabschnitts angeordnet ist. Hierdurch kann das Werkzeugfunktionselement zwischen den beiden Teilen des zweigeteilten Werkzeugaufnahmeabschnitts, d.h. sozusagen innerhalb eines Teils des Multifunktionswerkzeugs angeordnet werden, insbesondere dann, wenn das Werkzeugfunktionselement eingeklappt ist. Hierdurch ist das Werkzeugfunktionselement geschützt angeordnet, so dass dieses nicht versehentlich beschädigt werden kann oder ein Nutzer sich nicht daran verletzen kann.

Es ist denkbar, dass der Griffabschnitt zweigeteilt ist, wobei der erste Teil des Griffabschnitts einstückig mit einem ersten Teil des Werkzeugaufnahmeabschnitts und der zweite Teil des Griffabschnitts einstückig mit einem zweiten Teil des Werkzeugaufnahmeabschnitts ausgebildet ist. Eine solche einteilige Ausbildung von Griffabschnitt und Werkzeugaufnahmeabschnitt kann einfach und kostengünstig herstellbar sein.

Es ist außerdem vorstellbar, dass das Muitifunktionswerkzeug einen zweiten Werkzeugaufnahmeabschnitt aufweist, der dem ersten Werkzeugaufnahmeabschnitt gegenüberliegend angeordnet ist. An dem zweiten Werkzeugaufnahmeabschnitt kann ebenfalls mindestens ein Werkzeugfunktionselement angeordnet sein. In diesem Ausführungsbeispiel kann also beidseitig, z.B. an beiden Enden des Multifunktionswerkzeugs, jeweils ein Werkzeugaufnahmeabschnitt mit einem oder mehreren Werkzeugfunktionselementen vorgesehen sein, so dass das Multifunktionswerkzeug deutlich mehr Funktionen in Form von vielen unterschiedlichen Werkzeugfunktionselementen zur Verfügung stellen kann.

In einer Ausführungsform können der erste und der zweite Werkzeugaufnahmeabschnitt eine gemeinsame Schnittachse aufweisen, die parallel zu der Haupterstreckungsrichtung des Griffabschnitts verläuft. Die beiden Werkzeugaufnahmeabschnitte bzw. die daran angeordneten Werkzeugfunktionselemente sind also symmetrisch zueinander angeordnet, so dass eingeklappte Werkzeugfunktionselemente sich einander gegenüberliegen. Hierdurch wird eine kompakte Bauform des erfindungsgemäßen Multifunktionswerkzeugs, insbesondere eine kompakte Bauform in Haupterstreckungsrichtung, erreicht.

Gemäß einer weiteren denkbaren Ausführungsform können der erste und der zweite Werkzeugaufnahmeabschnitt eine gemeinsame Schnittachse aufweisen, die schräg zu der Haupterstreckungsrichtung des Griffabschnitts verläuft. In einer bevorzugten derartigen Ausführungsform kann die gemeinsame Schnittachse beispielsweise auch zusätzlich durch den Mittelpunkt des Griffabschnitts verlaufen. Hierdurch wird eine kompakte Bauform des erfindungsgemäßen Multifunktionswerkzeugs, insbesondere eine kompakte Bauform in einer Richtung senkrecht zur Haupterstreckungsrichtung, erreicht.

Es ist vorstellbar, dass beide Kraftausübungsmittel des mindestens einen Werkzeugfunktionselements entlang einer gemeinsamen Translationsachse relativ zueinander translatorisch bewegbar sind. Eine translatorische Bewegung ist besonders gut zum Betätigen eines Kettenschnellverschlusses geeignet. Außerdem bietet dies den Vorteil, dass die Relativbewegung zwischen den beiden Kraftausübungsmitteln auf einfache Weise realisierbar ist. Hierdurch wird die Handhabung des Multifunktionswerkzeugs erleichtert, da beide Kraftausübungsmittel auf derselben Achse relativ zueinander bewegbar sind und das Multifunktionswerkzeug somit intuitiv bedienbar ist.

Es ist denkbar, dass das Werkzeugfunktionselement derart ausgebildet ist, dass die beiden Kraftausübungsmittel ausschließlich translatorisch relativ zueinander bewegbar sind. Bei herkömmlichen Kettenzangen wird aufgrund ihres Drehgelenks neben einer translatorischen Bewegung zusätzlich eine rotatorische Bewegung ausgeführt. Aufgrund der bei dem erfindungsgemäßen Multifunktionswerkzeug ausschließlichen translatorischen Relativbewegbarkeit kann auf eine, wie bei bekannten Kettenzangen übliche, zusätzliche Rotationsbewegung zum Aufbringen der Kraft vollständig verzichtet werden. Zudem werden keine langen Hebelarme benötigt, was zu einem erfindungsgemäßen Multifunktionswerkzeug mit kompakten Abmessungen führt.

Es ist denkbar, dass der Aufnahmeabschnitt einen Halteabschnitt aufweist, der ausgebildet ist, um den Kettenschnellverschluss gegen ein Verkippen entlang einer quer zur Kettenlängsachse verlaufenden Achse oder gegen eine aus dem Aufnahmeabschnitt hinaus gerichtete Bewegung zu sichern. Somit kann der Kettenschnellverschluss beim Öffnen und/oder Schließen sicher von dem Halteabschnitt aufgenommen und gehalten beziehungsweise gelagert werden. Der Halteabschnitt verhindert, dass der Kettenschnellverschluss in dem Werkzeugfunktionselement beim Betätigen kippt und dabei möglicher Weise aus dem Werkzeugfunktionselement herausspringt.

Es ist vorstellbar, dass das Werkzeugfunktionselement eine Linearführungseinrichtung aufweist, wobei die Linearführungseinrichtung ein erstes Linearführungselement und ein zweites Linearführungselement aufweist und das erste Linearführungselement relativ zu dem zweiten Linearführungselement translatorisch bewegbar ist, und wobei zumindest eines der beiden Kraftausübungsmittel an dem ersten oder dem zweiten Linearführungselement angeordnet ist. Die Linearführungseinrichtung ermöglicht eine lineare translatorische Bewegung. Da zumindest eines der Kraftausübungsmittel an dem ersten oder zweiten beweglichen Linearführungselement der Linearführungseinrichtung angebracht ist, kann sich dieses Kraftausübungsmittel ebenso linear translatorisch relativ zu dem jeweils anderen Kraftausübungsmittel bewegen. Mit der Linearführungseinrichtung kann also eine lineare translatorische Relativbewegung der beiden Kraftausübungsmittel bewerkstelligt und verbessert werden.

In einer Ausführungsform ist das zumindest eine der beiden Kraftausübungsmittel rotatorisch bewegbar an dem ersten oder dem zweiten Linearführungselement angeordnet. In einer weiteren Ausführungsform ist das zumindest eine der beiden Kraftausübungsmittel translatorisch bewegbar an dem ersten oder dem zweiten Linearführungselement angeordnet. In einer noch weiteren Ausführungsform ist das zumindest eine der beiden Kraftausübungsmittel rotatorisch und translatorisch bewegbar an dem ersten oder dem zweiten Linearführungselement angeordnet. Beispielsweise kann ein erstes Linearführungselement als ein Lager und ein zweites Linearführungselement als ein darin gelagerter Bolzen vorgesehen sein, wobei eines der beiden Kraftausübungsmittel an dem Bolzen angeordnet ist. Falls der Bolzen selbst in dem Lager nicht bewegbar sein sollte, dient die translatorisch und/oder rotatorisch bewegbare Anbringung des Kraftausübungsmittels an diesem Bolzen dazu, dass das Kraftausübungsmittel durch den Bolzen linear geführt wird während es eine translatorische Bewegung relativ zu dem anderen Kraftausübungsmittel ausführt. Aufgrund der rotatorischen Bewegbarkeit kann das Kraftausübungsmittel beispielsweise um das Linearführungselement herum bewegbar und beispielsweise um dieses schwenkbar sein. Ein Linearführungselement erleichtert die Durchführung einer geradlinigen translatorischen Bewegung der beiden Kraftausübungsmittel relativ zueinander. Das Linearführungselement kann beispielsweise ein Bolzen sein, auf dem eines oder beide Kraftausübungsmittel entlang der Bolzenlängsachse gleiten können. Der Betrag der Translationsbewegung kann beispielsweise durch einen an dem Bolzenende vorgesehenen Sicherungsring oder Splint begrenzt sein. Weitere Führungen, wie z.B. an dem Bolzen und dem Kraftausübungsmittel vorgesehene Nuten und Federn, können das bzw. die Kraftausübungsmittel auf dem Bolzen gegen Rotation sichern. Eine Rotation der Kraftausübungsmittel auf dem Bolzen kann aber gemäß Ausführungsformen auch gewünscht sein.

Es ist denkbar, dass das Werkzeugfunktionselement ein Lager aufweist, wobei das nicht an einem der beiden Linearführungselemente angeordnete Kraftausübungsmittel translatorisch fixiert an diesem Lager angebracht ist. Das Lager kann zwar eine Rotation des gelagerten Kraftausübungsmittels um eine parallel zur Kettenlängsachse verlaufende Rotationsachse herum erlauben, was wiederum die Ausrichtung des Werkzeugfunktionselements zu einer Kette hin erleichtert. Das Lager fixiert das gelagerte Kraftausübungsmittel jedoch gegen eine translatorische Bewegung, so dass sich das andere der beiden Kraftausübungsmittel relativ zu dem gelagerten Kraftausübungsmittel bewegen kann.

In einer Ausführungsform kann das erste Linearführungselement ein Innengewinde und das zweite Linearführungselement ein mit dem Innengewinde in Eingriff stehendes Außengewinde aufweisen, wobei eines der beiden Kraftausübungsmittel an dem ersten Linearführungselement angeordnet ist und die translatorische Relativbewegung der beiden Kraftausübungsmittel zueinander durch eine Rotation der miteinander in Eingriff stehenden Gewinde der beiden Linearführungselemente bereitgestellt wird. Beispielsweise kann das zweite Linearführungselement ein Gewindebolzen sein. Das erste Linearführungselement kann ein ein komplementäres Innengewinde aufweisendes Lager sein. Der Gewindebolzen kann gedreht werden, so dass sich der Gewindebolzen an dem Lager abstützt und eine Translationsbewegung ausführt. Dies bietet eine einfache Möglichkeit zur Realisierung eines kompakten Multifunktionswerkzeugs mit einem Werkzeugfunktionselement, das eine lineare translatorische Relativbewegung der beiden Kraftausübungsmittel zueinander bereitstellt. Aufgrund der Gewinde kann eine Kraftübersetzung erfolgen, was das Betätigen des Kettenschnellverschlusses erleichtert. Dabei bedarf es zur Kraftübersetzung keiner, wie bei Kettenzangen üblichen, langen Hebelarme.

Es ist denkbar, dass eines der beiden Kraftausübungsmittel einstückig mit dem Werkzeugfunktionselement ausgebildet ist. Dies bietet eine einfache Möglichkeit zur Herstellung des Multifunktionswerkzeugs. Außerdem hat eine einstückige Ausbildung den Vorteil, dass diese eine erhöhte Stabilität im Vergleich zu separaten Verbindungen aufweist.

Es ist ferner denkbar, dass zumindest eines der Kraftausübungsmittel ausgebildet ist, um eine etwa in Kettenlängsrichtung wirkende Kraft auf das jeweilige Kettenlaschenverbindungsmittel auszuüben. In anderen Worten kann also das erste und/oder das zweite Kraftausübungsmittel ausgebildet sein, um eine etwa in Kettenlängsrichtung wirkende Kraft auf das jeweilige Kettenlaschenverbindungsmittel auszuüben. Unter der Kettenlängsrichtung ist diejenige Richtung zu verstehen, in der sich die Kette erstreckt, beziehungsweise in der die einzelnen Glieder der Kette nacheinander, das heißt der Reihe nach, angeordnet sind. Ausgehend von einem Kettenlaschenverbindungsmittel eines in einer Kette angeordneten Kettenglieds, kann eine in Kettenlängsrichtung wirkende Kraft demnach eine Kraft sein, die von diesem Kettenlaschenverbindungsmittel aus zu dem gegenüberliegenden Kettenlaschenverbindungsmittel derselben Kettenlasche gerichtet ist, oder eine in die entgegengesetzte Richtung wirkende Kraft, das heißt eine Kraft, die von diesem Kettenlaschenverbindungsmittel in Richtung eines nächstliegend benachbarten Kettenglieds gerichtet ist. Die Kraftausübungsmittel können also eine in Kettenlängsrichtung gesehene Zug- und/oder Druckkraft auf die Kettenlaschenverbindungsmittel des Kettenschnellverschlusses ausüben.

Es ist vorstellbar, dass zumindest eines der beiden Kraftausübungsmittel derart ausgebildet ist, dass die auf das erste Kettenlaschenverbindungsmittel ausgeübte Kraft und die auf das zweite Kettenlaschenverbindungsmittel ausgeübte Kraft etwa entgegengesetzt gerichtet sind. In anderen Worten können die Kettenlaschenverbindungsmittel aufgrund der mittels der Kraftaufbringungsmittel aufgebrachten entgegengesetzt wirkenden Kräfte beispielweise voneinander weg gezogen oder gedrückt werden, um den Kettenschnellverschluss zu verschließen, oder zueinander hin gedrückt oder gezogen werden, um den Kettenschnellverschluss zu öffnen. Hierfür ist die erfindungsgemäß vorgesehene Translationsbewegung zur Ausübung der entgegengesetzt wirkenden Kräfte vorteilhaft, da die in bekannten Kettenschnellverschlüssen vorgesehenen Langlöcher parallel verlaufende Längsseiten aufweisen, die in der Regel linear beziehungsweise geradlinig verlaufen. Die Translationsbewegung kann vorzugsweise ebenso geradlinig ausführbar sein. Eine Rotationsbewegung hingegen, wie sie beispielsweise von Kettenzangen her bekannt ist, ist zum Betätigen eines solchen geradlinige Längsseiten eines Langlochs aufweisenden Kettenschnellverschlusses weniger geeignet.

Es ist denkbar, dass zumindest eines der beiden Kraftausübungsmittel die Kraft unmittelbar auf das jeweilige Kettenlaschenverbindungsmittel ausübt. So kann die Kraftübertragung direkt erfolgen. Dies kann beispielsweise dadurch ermöglicht werden, dass ein Kraftausübungsmittel direkt mit dem jeweiligen Kettenlaschenverbindungsmittel zur Anlage kommt. Ein Kettenlaschenverbindungsmittel kann beispielsweise ein Niet oder ein Bolzen sein. Eine um einen Niet oder Bolzen herum angeordnete optionale Kettenrolle kann ebenfalls Bestandteil eines Kettenlaschenverbindungsmittels sein. Bei einigen Kettenschnellverschlüssen wird der fest mit einer Kettenlasche des Kettenschnellverschlusses verbundene Niet beispielsweise durch eine Öffnung einer in einem benachbarten Kettenglied vorgesehenen Kettenrolle hindurchgeführt. Der fest mit der Kettenlasche des Kettenschnellverschlusses verbundene Niet ist also von dieser Kettenrolle des Nachbarglieds umgeben und diese Einheit aus Niet und umgebender Kettenrolle wird im Kontext dieser Anmeldung ebenfalls als ein Kettenlaschenverbindungsmittel angesehen. Demnach ist eine mittels eines erfindungsgemäßen Kraftausübungsmittels auf diese Kettenrolle ausgeübte Kraft als eine unmittelbar auf das Kettenlaschenverbindungsmittel ausgeübte Kraft zu verstehen. Die unmittelbar auf das jeweilige Kettenlaschenverbindungsmittel ausgeübte Kraft kann dabei mittels eines innenseitigen Kontakts der Kraftausübungsmittel mit dem jeweiligen Kettenlaschenverbindungsmittel erfolgen. In anderen Worten kontaktieren die Kraftausübungsmittel die sich zugewandten Seiten zweier gegenüberliegend angeordneter Kettenlaschenverbindungsmittel des Kettenschnellverschlusses. Alternativ kann die unmittelbar auf das jeweilige Kettenlaschenverbindungsmittel ausgeübte Kraft mittels eines außenseitigen Kontakts der Kraftausübungsmittel mit dem jeweiligen Kettenlaschenverbindungsmittel erfolgen. In anderen Worten kontaktieren die Kraftausübungsmittel die sich jeweils voneinander abgewandten Seiten zweier gegenüberliegend angeordneter Kettenlaschenverbindungsmittel des Kettenschnellverschlusses.

Es ist ferner vorstellbar, dass zumindest eines der beiden Kraftausübungsmittel die Kraft auf ein Kettenlaschenverbindungsmittel mittelbar über eine Kettenlasche des Kettenschnellverschlusses oder über ein dem Kettenschnellverschluss benachbartes Kettenglied ausübt; letzteres, wenn der Kettenschnellverschluss in einer Kette angeordnet ist. Da die Kettenlaschenverbindungsmittel fest mit ihren jeweiligen Kettenlaschen verbunden sind, wird eine auf die Kettenlasche ausgeübte Kraft auch auf das jeweilige Kettenlaschenverbindungsmittel übertragen. Die Kraftübertragung auf das Kettenlaschenverbindungsmittel erfolgt also mittelbar über die Kettenlasche. Wenn der Kettenschnellverschluss in einer Kette angeordnet ist, dann ist der Kettenschnellverschluss ein Glied dieser Kette. Dementsprechend ist der Kettenschnellverschluss dann mit einem ersten und einem gegenüberliegenden zweiten, z.B. einem linken und einem rechten, benachbarten Kettenglied verbunden. Demnach kann ein Kraftausübungsmittel eines erfindungsgemäßen Werkzeugfunktionselements ausgebildet sein, um die Kraft auf ein benachbartes Kettenglied auszuüben. Diese Kraft wird dann mittelbar über das besagte benachbarte Kettenglied, auf das jeweilige Kettenlaschenverbindungsmittel des Kettenschnellverschlusses aufgebracht. In anderen Worten kann der Kettenschnellverschluss mittels eines erfindungsgemäßen Werkzeugfunktionselements geöffnet und/oder geschlossen werden, indem das Werkzeugfunktionselement die Kraft nicht direkt auf den Kettenschnellverschluss sondern auf benachbarte Kettenglieder aufbringt, die diese Kraft dann wiederum auf den Kettenschnellverschluss übertragen.

Es ist ferner denkbar, dass sich der Halteabschnitt zumindest abschnittsweise über eine in Kettenlängsrichtung durch das Kettenlaschenverbindungsmittel verlaufende Mittellinie hinaus erstreckt und der Halteabschnitt dabei zumindest abschnittsweise mit einem oberhalb der Mittellinie angeordneten Abschnitt des Kettenlaschenverbindungsmittels in Kontakt ist. Der Halteabschnitt umgreift sozusagen, zumindest teilweise, das Kettenlaschenverbindungsmittel. Dabei umgreift der Halteabschnitt das Kettenlaschenverbindungsmittel zumindest abschnittsweise von oben, d.h. der Halteabschnitt umgreift zumindest teilweise einen oberhalb der Mittellinie befindlichen Teil des Kettenlaschenverbindungsmittels. Der Halteabschnitt hält das Kettenlaschenverbindungsmittel sozusagen fest und verhindert somit ein Herausspringen des Kettenschnellverschlusses aus einem erfindungsgemäßen Werkzeugfunktionselement beim Öffnen und/oder Schließen.

Die Erfindung betrifft ein Multifunktionswerkzeug mit einem oben beschriebenen erfindungsgemäßen Werkzeugfunktionselement. Solche Multifunktionswerkzeuge sind beispielsweise aus dem Radsport bekannt. Diese Multifunktionswerkzeuge sind handlich und kompakt und daher in der Regel portabel bzw. tragbar. Das oben beschriebene Werkzeugfunktionselement ist als ein Teil beziehungsweise als ein Bit dieses Multifunktionswerkzeugs vorgesehen. Das Werkzeugfunktionselement ist vorzugsweise beweglich an dem Multifunktionswerkzeug angebracht, so dass das Werkzeugfunktionselement bei Bedarf ein- und ausklappbar ist.

Es ist vorstellbar, dass zumindest eines der beiden Kraftausübungsmittel beweglich an einem erfindungsgemäßen Werkzeugfunktionselement angeordnet ist. Dies ermöglicht eine einfache Ausrichtung beim Anlegen eines erfindungsgemäßen Werkzeugfunktionselements an einen Kettenschnellverschluss zum Zwecke des Betätigens desselben. Beispielsweise kann bei einer in einem Zweirad eingebauten Kette das bewegliche Kraftausübungsmittel auch dann gut an den Kettenschnellverschluss herangeführt werden, wenn die Kette schwer zugänglich ist. Ein weiterer Vorteil besteht darin, dass ein drehbares Kraftausübungsmittel beispielsweise eingeklappt werden kann, wenn ein erfindungsgemäßes Werkzeugfunktionselement nicht gebraucht wird, sodass dieses platzsparend verstaubar ist.

Ausführungsbeispiele der Erfindung sind in der Zeichnung dargestellt und werden nachstehend erläutert. Es zeigen:

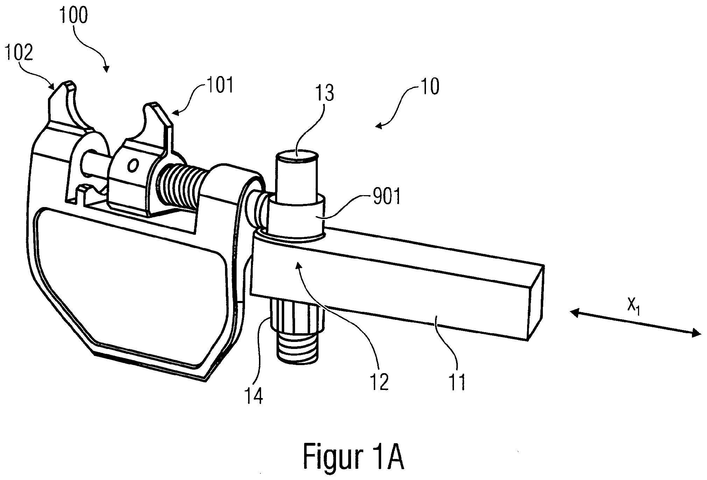

- Fig. 1A: eine Perspektivansicht eines erfindungsgemäßen Multifunktionswerkzeugs,

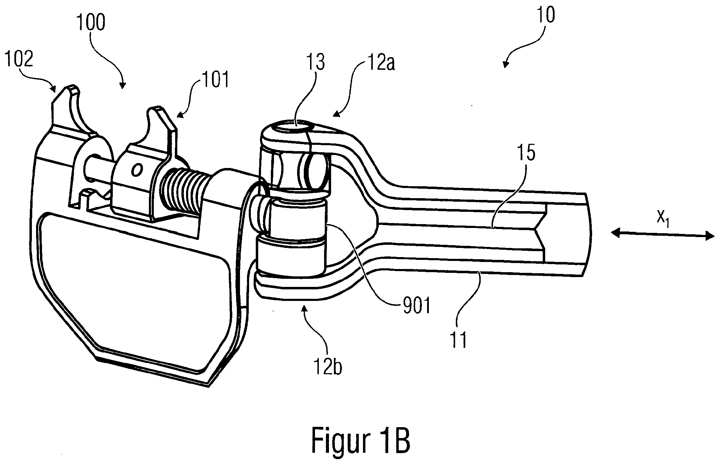

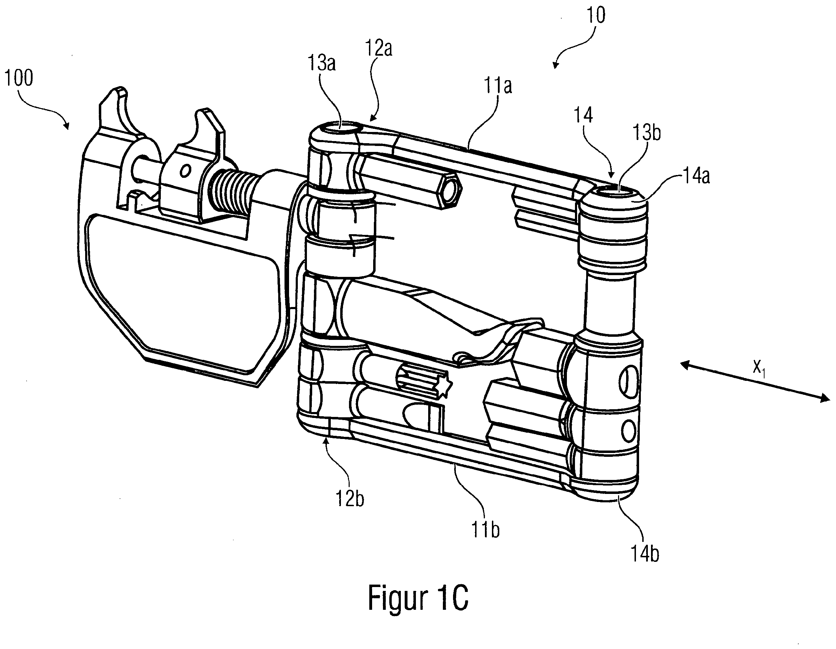

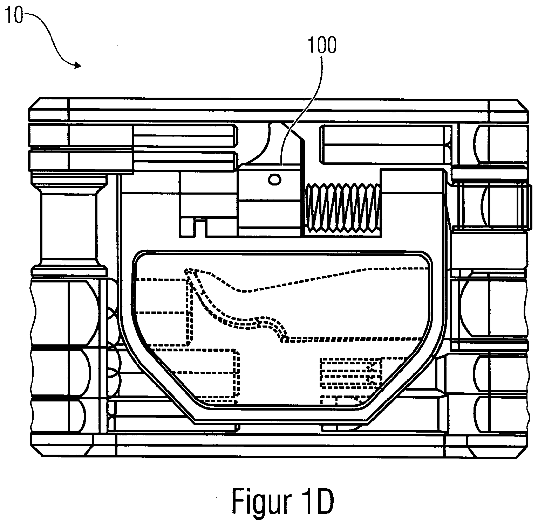

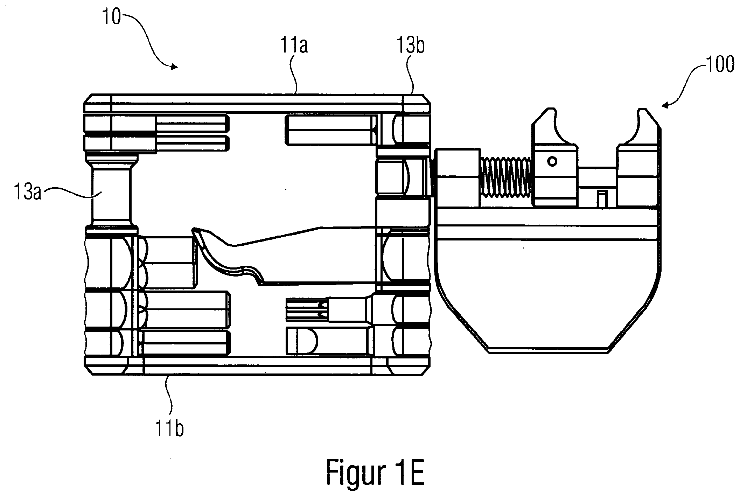

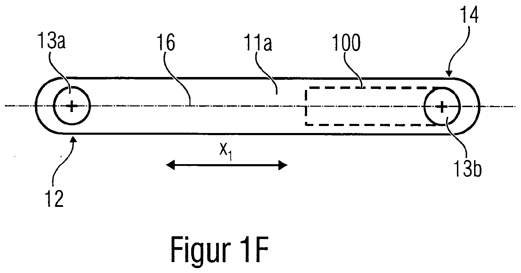

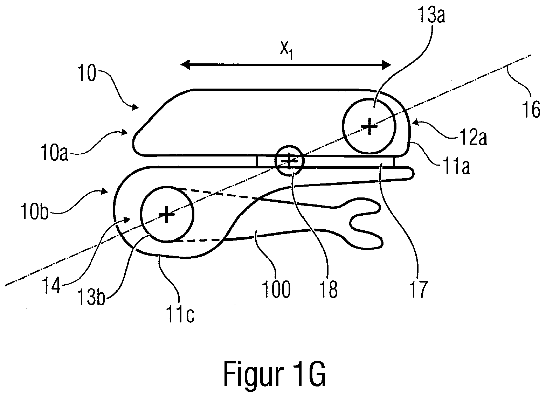

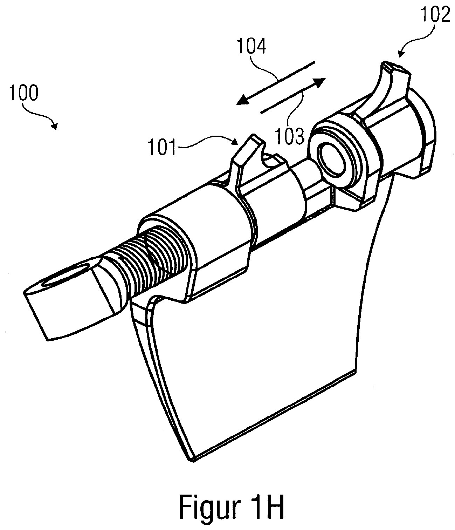

- Fig. 1: B eine Perspektivansicht eines weiteren erfindungsgemäßen Multifunktionswerkzeugs,
- Fig. 1C: eine Perspektivansicht eines weiteren erfindungsgemäßen Multifunktionswerkzeugs mit einem ausgeklappten erfindungsgemäßen Werkzeugfunktionselement,
- Fig. 1D: eine Seitenansicht des Multifunktionswerkzeugs aus Figur 1C mit einem eingeklappten erfindungsgemäßen Werkzeugfunktionselement,
- Fig. 1E: eine weitere Seitenansicht des Multifunktionswerkzeugs aus Figur 1C mit einem ausgeklappten erfindungsgemäßen Werkzeugfunktionselement,
- Fig. 1: F eine Draufsicht auf ein erfindungsgemäßes Multifunktionswerkzeug mit einem eingeklappten erfindungsgemäßen Werkzeugfunktionselement,
- Fig. 1G: eine Draufsicht auf ein weiteres erfindungsgemäßes Multifunktionswerkzeug mit einem eingeklappten erfindungsgemäßen Werkzeugfunktionselement,
- Fig. 1H: eine Perspektivansicht eines erfindungsgemäßen Werkzeugfunktionselements,
- Fig. 2A: eine Seitenansicht eines Werkzeugfunktionselements,
- Fig. 2B: eine Seitenansicht des Werkzeugfunktionselements gemäß Figur 2A mit einem Teil eines stilisierten Kettenlaschenverbindungsmittels,
- Fig. 2C: eine Seitenansicht des Werkzeugfunktionselements gemäß Figur 2A mit einem stilisierten Kettenlaschenverbindungsmittel,
- Fig. 2D: eine Seitenansicht des Werkzeugfunktionselements gemäß Figur 2A mit einem stilisierten Kettenlaschenverbindungsmittel,
- Fig. 3: eine Perspektivansicht eines exemplarischen Werkzeugfunktionselements,
- Fig. 4: eine Seitenansicht des Werkzeugfunktionselements aus Figur 3,
- Fig. 5: eine Perspektivansicht eines Werkzeugfunktionselements mit einem Ausschnitt einer mit einem Kettenschnellverschluss verschlossenen Kette,
- Fig. 6: eine Draufsicht auf ein Werkzeugfunktionselement mit einem Ausschnitt einer mit einem Kettenschnellverschluss verschlossenen Kette,
- Fig. 7: eine Seitenansicht eines Werkzeugfunktionselements mit einem Ausschnitt einer mit einem Kettenschnellverschluss verschlossenen Kette,
- Fig. 8A: eine weitere Perspektivansicht eines Werkzeugfunktionselements mit einem Ausschnitt einer mit einem Kettenschnellverschluss verschlossenen Kette,
- Fig. 8B: eine weitere Perspektivansicht auf ein erfindungsgemäßes Werkzeugfunktionselement,
- Fig. 8C: eine weitere Perspektivansicht auf das Werkzeugfunktionselement von Figur 8B,
- Fig. 8D: eine weitere Perspektivansicht auf ein erfindungsgemäßes Werkzeugfunktionselement,
- Fig. 8E: eine weitere Perspektivansicht auf ein erfindungsgemäßes Werkzeugfunktionselement,
- Fig. 8F: eine Seitenansicht auf ein erfindungsgemäßes Werkzeugfunktionselement,
- Fig. 8G: eine Frontansicht auf das Werkzeugfunktionselement aus Figur 8F,
- Fig. 9: eine Perspektivansicht eines Werkzeugfunktionselements mit einem Ausschnitt einer mit einem Kettenschnellverschluss verschlossenen Kette sowie mit einem Ausschnitt einer vernieteten Kette,
- Fig. 10: eine Perspektivansicht eines Kettenschnellverschlusses für eine Kette,
- Fig. 11: eine Seitenansicht eines Kettenschnellverschlusses für eine Kette, und
- Fig. 12: eine Draufsicht auf einen Kettenschnellverschluss für eine Kette.

Figur 1A zeigt ein Ausführungsbeispiel eines erfindungsgemäßen tragbaren Multifunktionswerkzeugs 10. Das Multifunktionswerkzeug 10 weist einen Griffabschnitt 11 auf, an dem ein Nutzer das Multifunktionswerkzeug 10 halten kann.

Der Griffabschnitt 11 weist außerdem einen Werkzeugaufnahmeabschnitt 12 auf, an dem ein Werkzeugfunktionselement 100 angeordnet ist. Das Werkzeugfunktionselement 100 ist ausgebildet, um einen Kettenschnellverschluss 502, 1000 (Figuren 10, 11, 12) mit zwei Kettenlaschen 1001A, 1002A und einem Kettenlaschenverbindungsmittel 1001B, 1002B zu betätigen, d.h. zu öffnen bzw. zu schließen. Unterschiedliche Ausführungsbeispiele von erfindungsgemäßen Werkzeugfunktionselementen 100, 200 werden später unter Bezugnahme auf die Figuren 1H bis 9 ausführlich beschrieben.

Das hier abgebildete Werkzeugfunktionselement 100 weist unter anderem ein erstes Kraftausübungsmittel 101 auf. Das erste Kraftausübungsmittel 101 ist ausgebildet, um eine Kraft F₁, F₂ (Figur 11) auf das erste Kettenlaschenverbindungsmittel 1001B des Kettenschnellverschlusses 502, 1000 auszuüben.

Das Werkzeugfunktionselement 100 weist außerdem ein zweites Kraftausübungsmittel 102 auf, das ausgebildet ist, um eine Kraft F1, F2 auf das zweite Kettenlaschenverbindungsmittel 1002B des Kettenschnellverschlusses 502, 1000 auszuüben.

Erfindungsgemäß sind das erste Kraftausübungsmittel 101 und das zweite Kraftausübungsmittel 102 relativ zueinander translatorisch bewegbar, um den Kettenschnellverschluss 502, 1000 mittels dieser translatorischen Bewegung zu betätigen.

Unter einem Multifunktionswerkzeug 10 ist ein Werkzeug zu verstehen, das mehrere Funktionen miteinander vereint, z.B. eine Schraubfunktion, eine Schneidefunktion, eine Pressfunktion und dergleichen. Hierfür weist ein Multifunktionswerkzeug 10 in der Regel ein oder mehrere Werkzeugfunktionselemente 100 auf, mit denen die jeweilige gewünschte Funktion ausführbar ist. Diese Werkzeugfunktionselemente 100 werden umgangssprachlich auch als Bits bezeichnet.

Mit dem erfindungsgemäßen Werkzeugfunktionselement 100 kann ein Kettenschnellverschluss 502, 1000 betätigt, d.h. sowohl geöffnet als auch geschlossen, werden. Somit erfüllt das abgebildete Werkzeugfunktionselement 100 bereits mehrere Funktionen (Öffnen und Schließen) und das erfindungsgemäße Multifunktionswerkzeug 10 kann als ein solches bezeichnet werden.

Das erfindungsgemäße Multifunktionswerkzeug 10 bzw. der Griffabschnitt 11 weist eine Haupterstreckungsrichtung X₁ auf. Der Werkzeugaufnahmeabschnitt 12 des Multifunktionswerkzeugs 10 weist einen Bolzen 13 auf, der sich quer, vorzugsweise senkrecht, zu der Haupterstreckungsrichtung X₁ des Griffabschnitts 11 erstreckt. Das Werkzeugfunktionselement 100 ist an diesem Bolzen 13 angeordnet.

In dem in Figur 1A abgebildeten Ausführungsbeispiel weist der Werkzeugaufnahmeabschnitt 12 eine Öffnung auf durch die sich der Bolzen 13 hindurch erstreckt. Der Bolzen 13 kann mit einem geeigneten Sicherungsmittel, wie z.B. eine Mutter 14, an dem Werkzeuganbringungsabschnitt 12 befestigt werden. Der Bolzen 13 kann drehbar in dem Werkzeuganbringungsabschnitt 12 gelagert sein. Vorzugsweise ist der Bolzen 13 jedoch nicht drehbar in dem Werkzeuganbringungsabschnitt 12 fixiert.

Wie eingangs erwähnt, dient der Werkzeuganbringungsabschnitt 12 dazu, ein oder mehrere Werkzeugfunktionselemente 100 daran anzubringen, um diese mit dem Griffabschnitt 11 des Multifunktionswerkzeugs 10 zu verbinden.

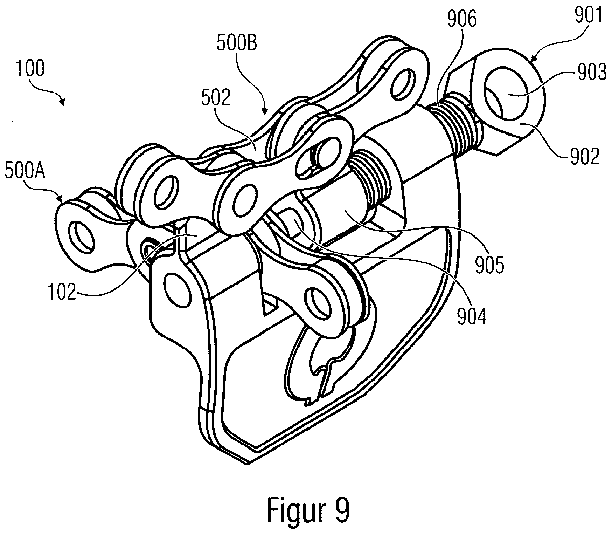

Hierfür weist das Werkzeugfunktionselement 100 selbst auch einen Anbringungsabschnitt 901 auf. Der Anbringungsabschnitt 901 des Werkzeugfunktionselements 100 wird hierfür an dem Werkzeugaufnahmeabschnitt 12 des Multifunktionswerkzeugs 10 angebracht. Der Anbringungsabschnitt 901 ist hier als eine Öse 902 mit einer Öffnung 903 (Figur 9) ausgebildet, wobei der Bolzen 13 durch diese Öffnung 903 hindurch geführt ist. Der Anbringungsabschnitt 901 wird später unter Bezugnahme auf Figur 9 ausführlicher beschrieben.

Figur 1B zeigt eine weitere Ausführungsform eines erfindungsgemäßen Multifunktionswerkzeugs 10. Diese Ausführungsform unterscheidet sich zu der in Figur 1A abgebildeten Ausführungsform darin, dass der Griffabschnitt 11 zwar weiterhin einteilig, der Werkzeugaufnahmeabschnitt 12 hingegen zweigeteilt ist. Der Werkzeugaufnahmeabschnitt 12 weist einen ersten Teil 12a und einen gegenüberliegend angeordneten zweiten Teil 12b auf. Der Werkzeugaufnahmeabschnitt 12 ist derjenige Abschnitt des Multifunktionswerkzeugs 10, an dem ein Werkzeugfunktionselement 100, hier mittels des Bolzens 13, angeordnet wird, um mit dem Griffabschnitt 11 gekoppelt zu werden.

Der Werkzeugaufnahmeabschnitt 12 ist hier in Form eines Jochs ausgebildet. Das Werkzeugfunktionselement 100 ist zwischen den beiden Teilen 12a, 12b des Werkzeugaufnahmeabschnitts 12 angeordnet. Genauer gesagt ist der Anbringungsabschnitt 901 des Werkzeugfunktionselements 100 zwischen den beiden Teilen 12a, 12b des Werkzeugaufnahmeabschnitts 12 angeordnet.

Das Werkzeugfunktionselement 100 ist drehbar an dem Werkzeugaufnahmeabschnitt 12 bzw. dem Griffabschnitt angeordnet. In den in den Figuren 1A und 1B gezeigten Ausführungsbeispielen ist die Drehbarkeit beispielsweise dadurch gegeben, dass der Anbringungsabschnitt 901 des Werkzeugfunktionselements 100 drehbar an dem Bolzen 13 angeordnet ist. Somit kann sich das Werkzeugfunktionselement 100 relativ zu dem Griffabschnitt 11 drehen.

Beispielsweise kann das Werkzeugfunktionselement 100, wenn es nicht weiter gebraucht wird, von der in Figur 1B gezeigten ausgeklappten Stellung in eine (nicht abgebildete) eingeklappte Stellung gedreht werden. Hierbei bewegen sich der Griffabschnitt 11 und das Werkzeugfunktionselement 100 aufeinander zu. Das Werkzeugfunktionselement 100 kann beispielsweise in einer in dem Griffabschnitt 11 vorgesehenen Vertiefung 15, zumindest abschnittsweise, versenkbar sein.

Figur 1C zeigt ein weiteres Ausführungsbeispiel eines erfindungsgemäßen Multifunktionswerkzeugs 10. Hier ist neben dem Werkzeugaufnahmeabschnitt 12 auch der Griffabschnitt 11 zweigeteilt, d.h. der Griffabschnitt 11 weist ein erstes Griffteil 11a und ein gegenüberliegendes zweites Griffteil 11b auf. In der Regel wird bei Benutzung des Multifunktionswerkzeugs 10 ein Griffteil 11a, 11b in der Handfläche des Nutzers liegen, und der andere der beiden Griffteile 11a, 11b wird von den Fingern des Nutzers umschlossen.

Das erste Griffteil 11a weist den ersten Teil 12a des Werkzeugaufnahmeabschnitts 12 auf. Das zweite Griffteil 11b weist den gegenüberliegenden zweiten Teil 12b des Werkzeugaufnahmeabschnitts 12 auf. Das erste Griffteil 11a ist einstückig mit dem ersten Teil 12a des Werkzeugaufnahmeabschnitts 12 ausgebildet. Das zweite Griffteil 11b ist einstückig mit dem gegenüberliegenden zweiten Teil 12b des Werkzeugaufnahmeabschnitts 12 ausgebildet.

Außerdem weist der Griffabschnitt 11 in dieser Ausführungsform einen zweiten, ebenfalls zweiteiligen, Werkzeugaufnahmeabschnitt 14 auf. Das erste Griffteil 11a weist den ersten Teil 14a des zweiten zweigeteilten Werkzeugaufnahmeabschnitts 14 auf. Das zweite Griffteil 11b weist den gegenüberliegenden zweiten Teil 14b des zweiten zweigeteilten Werkzeugaufnahmeabschnitts 14 auf. Das erste Griffteil 11a ist einstückig mit dem ersten Teil 14a des zweiten zweiteiligen Werkzeugaufnahmeabschnitts 14 ausgebildet. Das zweite Griffteil 11b ist einstückig mit dem gegenüberliegenden zweiten Teil 14b des zweiten zweiteiligen Werkzeugaufnahmeabschnitts 14 ausgebildet.

Der zweite Werkzeugaufnahmeabschnitt 14 weist einen Bolzen 13b auf, der sich quer, vorzugsweise senkrecht, zu der Haupterstreckungsrichtung X₁ des Griffabschnitts 11 erstreckt.

Wie in Figur 1C zu erkennen ist, ist an jedem der beiden Bolzen 13a, 13b eine Vielzahl von Werkzeugfunktionselementen angeordnet. Die Werkzeugfunktionselemente sind vorzugsweise alle drehbar an dem jeweiligen Bolzen 13a, 13b angeordnet, so dass die Werkzeugfunktionselemente ein- bzw. ausgeklappt werden können. Das Werkzeugfunktionselement 100 ist in Figur 1C beispielsweise ausgeklappt, während alle anderen Werkzeugfunktionselemente eingeklappt sind.

Figur 1D zeigt eine Seitenansicht auf das erfindungsgemäße Multifunktionswerkzeug 10. Hier sind alle Werkzeugfunktionselemente eingeklappt, so dass das tragbare Multifunktionswerkzeug 10 eine platzsparende Anordnung aufweist. Um dies zu verdeutlichen sind die Werkzeugfunktionselemente, die hinter dem erfindungsgemäßen Werkzeugfunktionselement 100 angeordnet sind, in Strichlinien angedeutet.

Figur 1E zeigt noch einmal eine Seitenansicht des erfindungsgemäßen Multifunktionswerkzeugs 10. Hier ist das Werkzeugfunktionselement 100 jedoch in einem ausgeklappten Zustand gezeigt und die weiteren Werkzeugfunktionselemente sind nun sichtbar.

Figur 1F zeigt eine Draufsicht auf das erste Teil 11a des zweigeteilten Griffabschnitts 11, wobei die Werkzeugfunktionselemente eingeklappt sind. Die Werkzeugfunktionselemente sind in der abgebildeten Draufsicht hinter dem ersten Griffabschnitt 11a angeordnet und daher nicht sichtbar. Das erfindungsgemäße Werkzeugfunktionselement 100 ist daher lediglich in Strichlinien angedeutet.

Es sind außerdem die beiden Bolzen 13a, 13b zu erkennen, an denen die Werkzeugfunktionselemente, und eben auch das erfindungsgemäße Werkzeugfunktionselement 100, angeordnet sind. Die beiden Bolzen 13a, 13b sind Bestandteil des jeweiligen Werkzeugaufnahmeabschnitts 12, 14. Darüber hinaus ist die Haupterstreckungsrichtung X₁ des Griffabschnitts 11 eingezeichnet.

Wie zu erkennen ist, sind die beiden Werkzeugaufnahmeabschnitte 12, 14 bzw. die beiden Bolzen 13a, 13b einander gegenüberliegend angeordnet. Der erste und der zweite Werkzeugaufnahmeabschnitt 12, 14 bzw. der erste und der zweite Bolzen 13a, 13b weisen eine gemeinsame Schnittachse 16 auf. In diesem Ausführungsbeispiel verläuft die gemeinsame Schnittachse 16 parallel zu der Haupterstreckungsrichtung X₁ des (hier zweigeteilten) Griffabschnitts 11.

Figur 1G zeigt ein weiteres Ausführungsbeispiel eines erfindungsgemäßen Multifunktionswerkzeugs 10. Das Multifunktionswerkzeug 10 weist zwei übereinander angeordnete Bestandteile 10a, 10b auf, die an einem Verbindungsabschnitt 17, vorzugsweise lösbar, miteinander verbunden sind.

Das Multifunktionswerkzeug 10 weist einen mehrteiligen Griffabschnitt 11 auf. Genauer gesagt weist der erste Werkzeugbestandteil 10a einen ersten Griffabschnitt 11a auf. Der erste Griffabschnitt 11a weist wiederum einen ersten Werkzeugaufnahmeabschnitt 12a auf. Der erste Werkzeugaufnahmeabschnitt 12a weist einen Bolzen 13a auf, an dem mindestens ein Werkzeugfunktionselement angeordnet ist.

Der zweite Werkzeugbestandteil 10b weist einen zweiten Griffabschnitt 11c auf. Der zweite Griffabschnitt 11c weist einen zweiten Werkzeugaufnahmeabschnitt 14 auf. Der zweite Werkzeugaufnahmeabschnitt 14 weist einen Bolzen 13b auf, an dem mindestens ein Werkzeugfunktionselement 100 angeordnet ist.

Der mehrteilige Griffabschnitt 11 weist auch hier eine Haupterstreckungsrichtung X₁ auf. Außerdem weist der mehrteilige Griffabschnitt 11 einen Mittelpunkt 18 auf, der sich beispielweise im Bereich des Verbindungsabschnitts 17 befinden kann.

Die beiden Werkzeugaufnahmeabschnitte 12, 14 bzw. die beiden Bolzen 13a, 13b weisen eine gemeinsame Schnittachse 16 auf, die schräg zu der Haupterstreckungsrichtung X₁ des mehrteiligen Griffabschnitts 11 verläuft. In einer besonderen Ausführungsform, wie sie in Figur 1G gezeigt ist, verläuft die schräge Schnittachse 16 zusätzlich durch den Mittelpunkt 18 des Griffabschnitts 11.

Figur 1H zeigt eine Perspektivansicht eines erfindungsgemäßen Werkzeugfunktionselements 100. Das Werkzeugfunktionselement 100 ist geeignet zum Betätigen eines in den Figuren 10, 11, 12 gezeigten Kettenschnellverschlusses 1000.

Das Werkzeugfunktionselement 100 weist ein erstes Kraftausübungsmittel 101 auf, das ausgebildet ist, um eine Kraft auf das erste Kettenlaschenverbindungsmittel 1001B des Kettenschnellverschlusses 1000 auszuüben.

Das Werkzeugfunktionselement 100 weist ein zweites Kraftausübungsmittel 102 auf, das ausgebildet ist, um eine Kraft auf das zweite Kettenlaschenverbindungsmittel 1002B des Kettenschnellverschlusses 1000 auszuüben.

Das Werkzeugfunktionselement 100 ist derart ausgebildet, dass das erste Kraftausübungsmittel 101 und das zweite Kraftausübungsmittel 102 relativ zueinander translatorisch bewegbar sind, um den Kettenschnellverschluss 1000 mittels dieser translatorischen Bewegung zu betätigen.

In der in Figur 1H abgebildeten Ausführungsform ist das Werkzeugfunktionselement 100 derart ausgebildet, dass die beiden Kraftausübungsmittel 101, 102 ausschließlich translatorisch relativ zueinander bewegbar sind. Insbesondere ist das Werkzeugfunktionselement 100 derart ausgebildet, dass das erste Kraftausübungsmittel 101 translatorisch in eine erste Richtung 103 und in eine entgegengesetzt gerichtete zweite Richtung 104 bewegbar ist. Durch diese translatorische Bewegbarkeit des ersten Kraftausübungsmittels 101 wird die erfindungsgemäße translatorische Relativbewegung zwischen dem ersten und dem zweiten Kraftausübungsmittel 101, 102 bereitgestellt. Die translatorische Relativbewegung ist vorzugsweise eine lineare translatorische Relativbewegung.

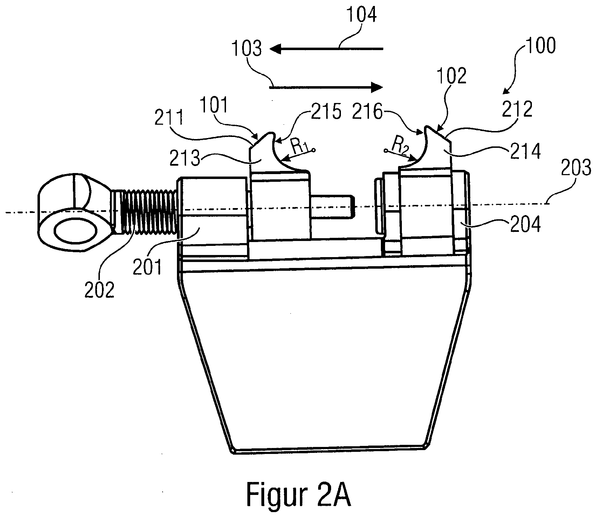

Figur 2A zeigt eine Seitenansicht eines erfindungsgemäßen Werkzeugfunktionselements 100. Zu erkennen ist das erste Kraftausübungsmittel 101, das ausgebildet ist, um eine Kraft auf das erste Kettenlaschenverbindungsmittel 1001B des Kettenschnellverschlusses 1000 auszuüben. Des Weiteren ist das zweite Kraftausübungsmittel 102 zu erkennen, das ausgebildet ist, um eine Kraft auf das zweite Kettenlaschenverbindungsmittel 1002B des Kettenschnellverschlusses 1000 auszuüben.

Wie bereits zuvor mit Bezug auf Figur 1H erwähnt, ist das erste Kraftausübungsmittel 101 translatorisch bewegbar, so dass die erfindungsgemäße translatorische Relativbewegung zwischen dem ersten Kraftausübungsmittel 101 und dem zweiten Kraftausübungsmittel 102 bereitgestellt wird. Das erste Kraftausübungsmittel 101 kann dabei zumindest in eine erste Richtung 103 bewegbar sein. Das erste Kraftausübungsmittel 101 kann auch in eine der ersten Richtung 103 entgegengesetzte Richtung 104 bewegbar sein.

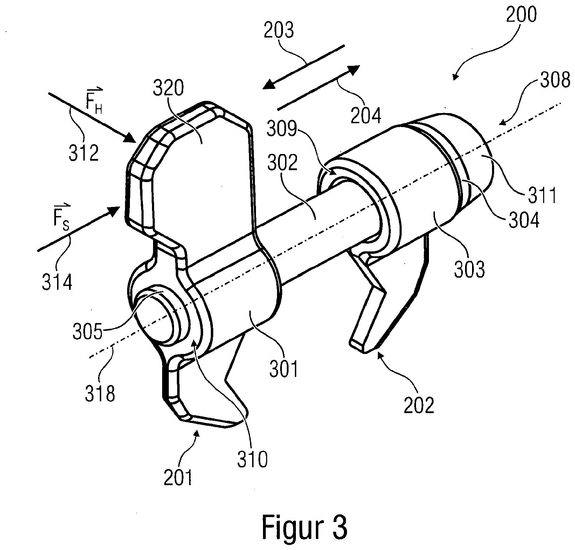

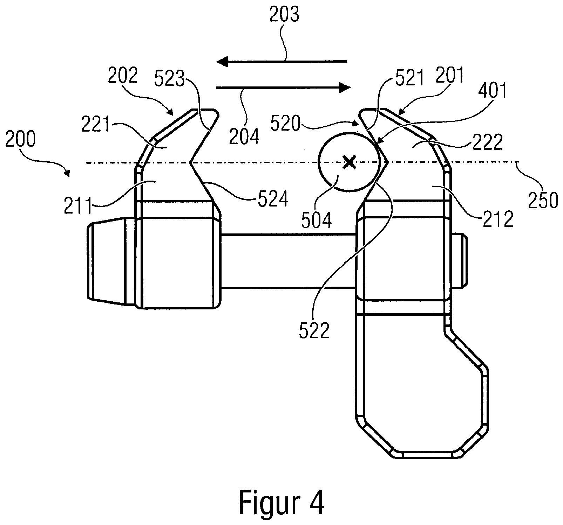

Die Figuren 3 und 4 zeigen ein weiteres Beispiel eines Werkzeugfunktionselements 200. Das Werkzeugfunktionselement 200 ist geeignet um einen in den Figuren 10 bis 12 gezeigten Kettenschnellverschluss 1000 zu betätigen.

Das Werkzeugfunktionselement 200 weist ein erstes Kraftausübungsmittel 201 auf, das ausgebildet ist, um eine Kraft auf das erste Kettenlaschenverbindungsmittel 1001B des Kettenschnellverschlusses 1000 auszuüben.

Das Werkzeugfunktionselement 200 weist ferner ein zweites Kraftausübungsmittel 202 auf, das ausgebildet ist, um eine Kraft auf das zweite Kettenlaschenverbindungsmittel 1002B des Kettenschnellverschlusses 1000 auszuüben.

Das Werkzeugfunktionselement 200 ist derart ausgebildet, dass das erste Kraftausübungsmittel 201 und das zweite Kraftausübungsmittel 202 relativ zueinander translatorisch bewegbar sind, um den Kettenschnellverschluss 1000 mittels dieser translatorischen Bewegung zu betätigen. Die translatorische Relativbewegung ist vorzugsweise eine lineare translatorische Relativbewegung.

Gemäß dieser Ausführungsform ist das erste Kraftausübungsmittel 201 in eine erste Richtung 203 und/oder in eine der ersten Richtung 203 entgegengesetzte zweite Richtung 204 bewegbar. In dieser Ausführungsform wäre es auch denkbar, dass das zweite Kraftausübungsmittel 202 in die erste Richtung 203 und/oder in die der ersten Richtung 203 entgegengesetzte zweite Richtung 204 bewegbar ist.

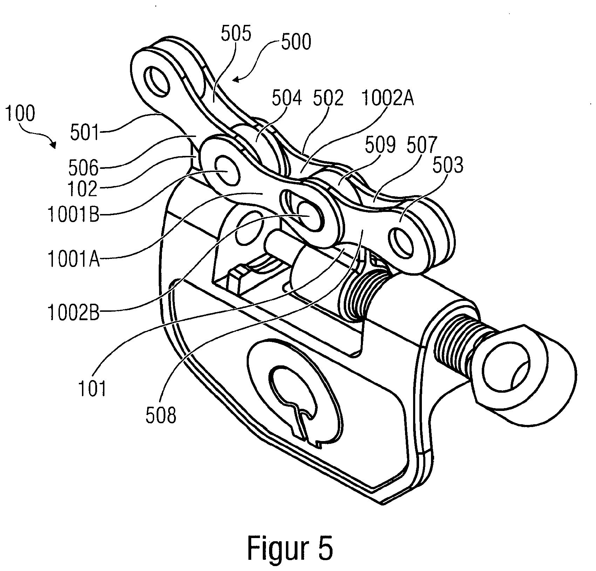

Figur 5 zeigt eine weitere Ausführungsform eines erfindungsgemäßen Werkzeugfunktionselements 100, das zusammen mit einer Kette 500 abgebildet ist. Der Übersichtlichkeit wegen ist lediglich ein Ausschnitt der Kette 500 dargestellt. Genauer gesagt sind lediglich drei Kettenglieder 501, 502, 503 einer ansonsten möglicherweise beliebig viele Kettenglieder aufweisenden Kette 500 gezeigt.

Es ist zu erkennen, dass die beiden Kettenglieder 501, 503 mit dem Kettenschnellverschluss 502 (der im Übrigen dem in den Figuren 10 bis 12 gezeigten Kettenschnellverschluss 1000 entspricht) verbunden bzw. verschlossen sind. Der Kettenschnellverschluss 502 ist somit ebenfalls ein Kettenglied der Kette 500.

Der Kettenschnellverschluss 502 weist eine erste Außenlasche 1001A und eine gegenüberliegend angeordnete zweite Außenlasche 1002A auf. Die erste Außenlasche 1001A weist ein erstes Kettenlaschenverbindungsmittel 1001B auf, welches sich in Richtung der zweiten Außenlasche 1002A erstreckt.

Das erste Kettenglied 501 weist eine erste Innenlasche 505 und eine gegenüberliegend angeordnete zweite Innenlasche 506 auf. Zwischen den beiden Innenlaschen 505, 506 ist eine Kettenrolle 504 angeordnet. Die Kettenrolle 504 weist in ihrem Zentrum eine (hier nicht gezeigte) sich durchgehend erstreckende Öffnung auf. Das erste Kettenlaschenverbindungsmittel 1001B des Kettenschnellverschlusses 502 ist in dem in Figur 5 abgebildeten Zustand durch diese in der Kettenrolle 504 vorgesehene Öffnung hindurchgeführt. Somit ist das erste Kettenlaschenverbindungsmittel 1001B des Kettenschnellverschlusses 502 von der Kettenrolle 504 umgeben.

Das dritte Kettenglied 503 weist eine erste Innenlasche 507 und eine gegenüberliegend angeordnete zweite Innenlasche 508 auf. Zwischen den beiden Innenlaschen 507, 508 ist eine Kettenrolle 509 angeordnet. Die Kettenrolle 509 weist in ihrem Zentrum eine (hier nicht gezeigte) sich durchgehend erstreckende Öffnung auf. Das zweite Kettenlaschenverbindungsmittel 1002B des Kettenschnellverschlusses 502 ist in dem in Figur 5 abgebildeten Zustand durch diese in der Kettenrolle 509 vorgesehene Öffnung hindurchgeführt. Somit ist das zweite Kettenlaschenverbindungsmittel 1002B des Kettenschnellverschlusses 502 von der Kettenrolle 509 umgeben.

Die beiden Kettenlaschenverbindungsmittel 1001B, 1002B des Kettenschnellverschlusses 502 können beispielsweise als Niet, Bolzen oder Verbindungsstift ausgebildet sein.

Die beiden Kraftausübungsmittel 101, 102 greifen zwischen die beiden Innenlaschen 505, 506; 507, 508 des dem Kettenschnellverschluss 502 jeweils unmittelbar benachbarten Kettenglieds 501, 503 ein. In Figur 5 sind daher die beiden Kraftausübungsmittel 101, 102 teilweise von den dargestellten Innenlaschen 505, 506, 507, 508 des ersten bzw. dritten Kettenglieds 501, 503 verdeckt und somit nur teilweise sichtbar. Es ist der Figur 5 jedoch zu entnehmen, dass die Kettenglieder 501, 502, 503 derart an dem Werkzeugfunktionselement 100 angeordnet sind, dass die beiden Kraftausübungsmittel 101, 102 zumindest abschnittsweise mit den Kettenrollen 504, 509 in Kontakt sind.

Dies soll näher mit Bezug auf Figur 2A erläutert werden. Hier sind die beiden Kraftausübungsmittel 101, 102 nicht von einer Kette verdeckt und somit erkennbar. Das erste Kraftausübungsmittel 101 weist einen ersten Aufnahmeabschnitt 211 zum Aufnehmen des Kettenschnellverschlusses 502 auf. Das zweite Kraftausübungsmittel 102 weist einen zweiten Aufnahmeabschnitt 212 zum Aufnehmen des Kettenschnellverschlusses 502 auf.

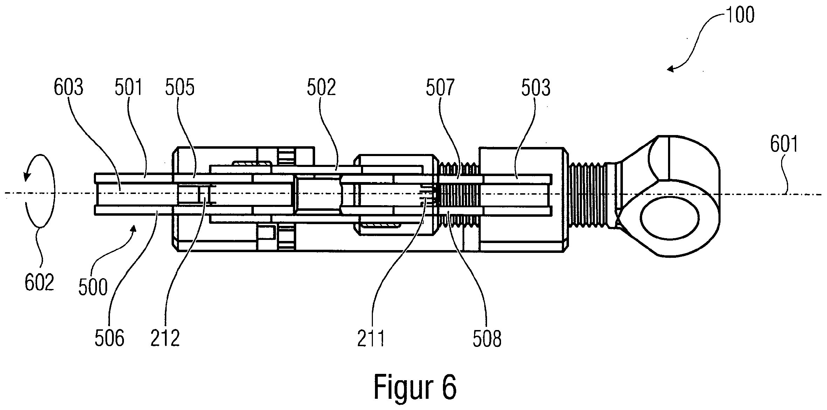

Die Aufnahmeabschnitte 211, 212 sind ausgebildet, um ein Verkippen des Kettenschnellverschlusses 502 entlang der Kettenlängsachse 601 (Figur 6) zu vermeiden. Hierfür soll kurz auf Figur 6 verwiesen werden. Figur 6 zeigt eine Draufsicht eines Werkzeugfunktionselements 100 mit einer an dem Werkzeugfunktionselement 100 angeordneten Kette 500. Die Kette 500 ist ausschnittsweise gezeigt und weist ein erstes, zweites und drittes Kettenglied 501, 502, 503 auf.

Die Kettenglieder 501, 502, 503 sind entlang der Kettenlängsachse 601 angeordnet. In Figur 6 sind ebenfalls die zuvor erwähnten Aufnahmeabschnitte 211, 212 zu sehen. Die Aufnahmeabschnitte 211, 212 sind ausgebildet, um ein Verkippen des Kettenverschlusses 502 entlang der Kettenlängsachse 601 zu vermeiden. Ein derartiges Verkippen ist symbolisch mit dem Pfeil 602 angedeutet. Hierbei handelt es sich um eine Rotation um die Kettenlängsachse 601 herum.

Zur weiteren Erläuterung der Ausführungsformen der Aufnahmeabschnitte 211, 212 soll nun erneut auf Figur 2A verwiesen werden. Hier ist des Weiteren zu erkennen, dass der erste Aufnahmeabschnitt 211 einen ersten Eingriffsabschnitt 213 aufweist. Der zweite Aufnahmeabschnitt 212 weist einen zweiten Eingriffsabschnitt 214 auf. Die beiden Eingriffsabschnitte 213, 214 sind ausgebildet, um zwischen zwei Kettenlaschen 505, 506,507, 508 (Figuren 5 und 6) eines dem Kettenschnellverschluss 502 benachbarten Kettenglieds 501, 503 einzugreifen, wenn der Kettenschnellverschluss 502 in einer Kette 500 angeordnet ist.

Bezüglich der Eingriffsabschnitte 213, 214 ist wiederum in der Draufsicht in Figur 6 zu erkennen, dass deren laterale Ausdehnung in Richtung der beiden gegenüberliegenden Kettenlaschen 505, 506 eines Kettenglieds 501 etwa der Breite des zwischen diesen beiden Kettenlaschen 505, 506 gebildeten Zwischenraums 603 entspricht. In anderen Worten entspricht die Breite der Eingriffsabschnitte 213, 214 etwa der lichten Weite zwischen zwei gegenüberliegend angeordneten Kettenlaschen 505, 506. Der erste Eingriffsabschnitt 213 greift also etwa form- und passgenau in den Zwischenraum 603 des dem Kettenschnellverschluss 502 benachbarten ersten Kettenglieds 501 ein. Selbiges gilt für den zweiten Eingriffsabschnitt 214, der etwa form- und passgenau in den Zwischenraum des dem Kettenschnellverschluss 502 benachbarten dritten Kettenglieds 503 eingreift.

Zur weiteren Erläuterung der Ausführungsformen der Aufnahmeabschnitte 211, 212 soll nun erneut auf Figur 2A verwiesen werden. Hier ist des Weiteren zu erkennen, dass der erste Aufnahmeabschnitt 211 einen ersten Kontaktabschnitt 215 aufweist, der mit einem Kettenlaschenverbindungsmittel 1001B eines Kettenschnellverschlusses 502 in Kontakt bringbar ist. Der zweite Aufnahmeabschnitt 212 weist einen zweiten Kontaktabschnitt 216 auf, der mit dem jeweils anderen Kettenlaschenverbindungsmittel 1002B des Kettenschnellverschlusses 502 in Kontakt bringbar ist.

Der erste Kontaktabschnitt 215 weist einen Radius R₁ auf. Der zweite Kontaktabschnitt 216 weist einen Radius R₂ auf. Die Radien R₁, R₂ entsprechen im Wesentlichen dem Radius des jeweiligen Kettenlaschenverbindungsmittels 1001B, 1002B.

Beispielsweise entspricht der erste Radius R₁ im Wesentlichen dem Radius bzw. dem Außenumfang der in Figur 5 gezeigten Kettenrolle 509 des dritten Kettenglieds 503. Der zweite Radius R₂ entspricht im Wesentlichen dem Radius bzw. dem Außenumfang der in Figur 5 gezeigten Kettenrolle 504 des ersten Kettenglieds 501. Wie zuvor erwähnt, sind die Kettenrollen 504, 509 auch als Kettenlaschenverbindungsmittel zu verstehen.

Durch die im Wesentlichen übereinstimmenden Radien R₁, R₂ der Kontaktabschnitte 215, 216 und der Kettenrollen 504, 509 können die Kettenlaschenverbindungsmittel 504, 509 formschlüssig mit den Kontaktabschnitten 215, 216 in Kontakt kommen. So kann der Kettenschnellverschluss 502 formschlüssig von den Aufnahmeabschnitten 211, 212 aufgenommen und sicher gehalten bzw. gelagert werden. Außerdem können die Kraftausübungsmittel 101, 102 so vorteilhaft die zum Betätigen des Kettenschnellverschlusses 502 benötigten Kräfte auf die Kettenlaschenverbindungsmittel 1001B, 1002B; 504, 509 ausüben.

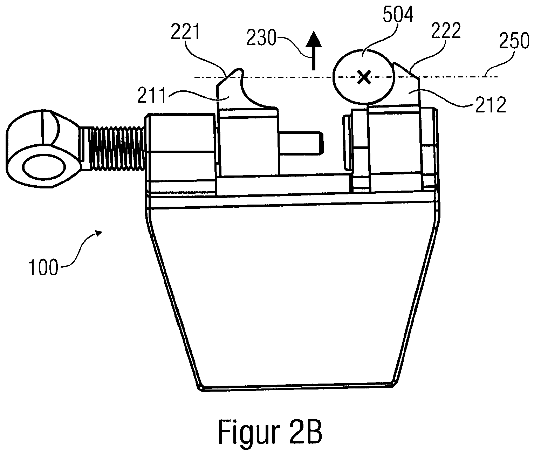

Zur weiteren Erläuterung der Ausführungsformen der Aufnahmeabschnitte 211, 212 soll nun auf Figur 2B verwiesen werden. Hier ist das Werkzeugfunktionselement 100 in einer Seitenansicht gezeigt, wobei im Vergleich zu der Figur 2A hier zusätzlich ein exemplarisches Kettenlaschenverbindungsmittel in Form einer Kettenrolle 504 eingezeichnet ist.

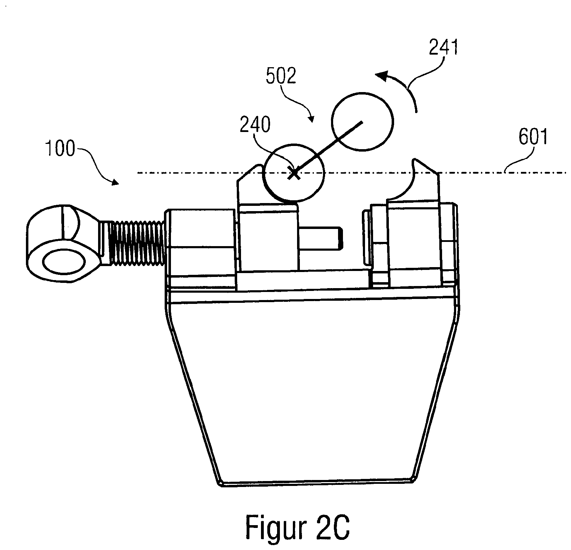

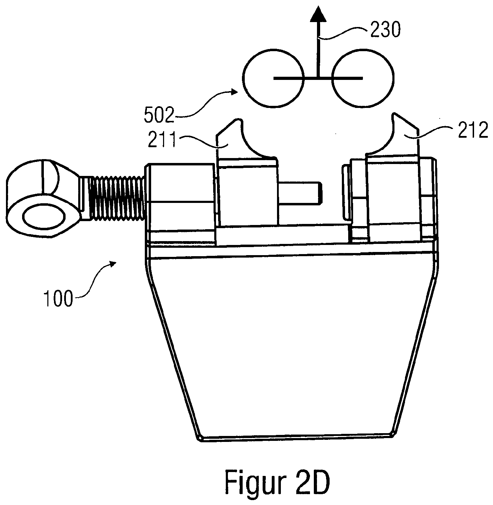

Der erste Aufnahmeabschnitt 211 weist einen ersten Halteabschnitt 221 auf. Der zweite Aufnahmeabschnitt 212 weist einen zweiten Halteabschnitt 222 auf. Die beiden Halteabschnitte 221, 222 sind ausgebildet, um den Kettenschnellverschluss 502 gegen ein Verkippen entlang einer quer zur Kettenlängsachse 601 verlaufenden Achse 240 (Figur 2C) oder gegen eine aus dem Aufnahmeabschnitt hinaus gerichtete Bewegung 230 (Figur 2D) zu sichern.

In Figur 2C ist ein stilisierter Kettenschnellverschluss 502 gezeigt. Figur 2C zeigt den Fall des Verkippens entlang einer quer zur Kettenlängsachse 601 verlaufenden Achse 240. Die Achse 240 zeigt in die Blatt- bzw. Zeichenebene hinein. Ein Verkippen des Kettenschnellverschlusses 502 um diese Achse 240 ist durch den symbolisierten Pfeil 241 angedeutet.

Figur 2D zeigt den Fall einer aus den Aufnahmeabschnitten 211, 212 hinaus gerichteten Bewegung 230. Der hier gezeigte stilisierte Kettenschnellverschluss 502 bewegt sich hierbei aus den Aufnahmeabschnitten 211, 212 hinaus, was durch den symbolisierten Pfeil 230 angedeutet ist.

Wie eingangs erwähnt, weisen die Aufnahmeabschnitte 211, 212 einen Halteabschnitt 221, 222 auf, der ausgebildet ist, um den Kettenschnellverschluss 502 gegen diese in den Figuren 2C und 2D gezeigten Bewegungen zu sichern. Die Halteabschnitte 221, 222 halten sozusagen den Kettenschnellverschluss 502 in dem Werkzeugfunktionselement 100 fest.

In Figur 2B ist des Weiteren zu erkennen, dass sich die Halteabschnitte 221, 222 zumindest abschnittsweise über eine in Kettenlängsrichtung durch das Kettenlaschenverbindungsmittel 504 verlaufende Mittellinie 250 hinaus erstreckt. Der oberhalb der Mittellinie 250 angeordnete Teil des Halteabschnitts 222 ist zumindest abschnittsweise mit dem oberhalb der Mittellinie 250 angeordneten Teil des Kettenlaschenverbindungsmittels 504 in Kontakt.

Dies ist auch in der in Figur 4 abgebildeten Ausführungsform zu sehen. Auch hier weisen die Aufnahmeabschnitte 211, 212 einen Halteabschnitt 221, 222 auf. Die Halteabschnitte 221, 222 erstrecken sich zumindest abschnittsweise über eine in Kettenlängsrichtung durch das Kettenlaschenverbindungsmittel 504 verlaufende Mittellinie 250 hinaus.

Der oberhalb der Mittellinie 250 angeordnete Teil des Halteabschnitts 222 ist hier nicht vollständig, sondern lediglich abschnittsweise mit dem oberhalb der Mittellinie 250 angeordneten Teil des Kettenlaschenverbindungsmittels 504 in Kontakt. Es kann auch lediglich ein einziger Kontaktpunkt 401 zwischen dem oberhalb der Mittellinie 250 angeordneten Teil des Halteabschnitts 222 und dem oberhalb der Mittellinie 250 angeordneten Teil des Kettenlaschenverbindungsmittels 504 vorgesehen sein.

Dies wird in vorliegendem Ausführungsbeispiel unter anderem dadurch realisiert, dass eine das Kettenlaschenverbindungsmittel 504 kontaktierende Kontaktfläche 520 des Halteabschnitts 222 als ein geradlinig verlaufender Abschnitt 521 ausgebildet ist. Dieser geradlinig verlaufende Abschnitt 521 verläuft tangential entlang der kreisrunden Form der Kettenrolle 504 und berührt diese an genau einem Punkt 401. In anderen Worten weist der Halteabschnitt 222 einen geradlinig verlaufenden Abschnitt 521 auf, der ausgebildet ist, um das Kettenlaschenverbindungsmittel 504 zu kontaktieren.

Der hier unterhalb des Halteabschnitts 222 angeordnete Aufnahmeabschnitt 212 weist ebenfalls einen geradlinig verlaufenden Abschnitt 522 auf, der ausgebildet ist, um das Kettenlaschenverbindungsmittel 504 zu kontaktieren. Der dem Aufnahmeabschnitt 212 zugehörige geradlinige Abschnitt 522 ist etwa spiegelbildlich zu dem dem Halteabschnitt 222 zugehörigen geradlinigen Abschnitt 521 ausgebildet, wobei die Mittellinie 250 als Spiegelachse dient.

Das gegenüberliegend angeordnete zweite Kraftausübungsmittel 202 weist eine dem oben beschriebenen ersten Kraftausübungsmittel 201 ähnliche Kontur auf. Der Halteabschnitt 221 des zweiten Kraftausübungsmittels 202 weist einen geradlinig verlaufenden Abschnitt 523 auf, der ausgebildet ist, um das Kettenlaschenverbindungsmittel 504 zu kontaktieren. Der unterhalb des Halteabschnitts 221 angeordnete Aufnahmeabschnitt 211 des zweiten Kraftausübungsmittels 202 weist ebenfalls einen geradlinig verlaufenden Abschnitt 524 auf, der ausgebildet ist, um das Kettenlaschenverbindungsmittel 504 zu kontaktieren.

Der dem Aufnahmeabschnitt 211 zugehörige geradlinige Abschnitt 524 ist etwa spiegelbildlich zu dem dem Halteabschnitt 221 zugehörigen geradlinigen Abschnitt 523 ausgebildet, wobei die Mittellinie 250 als Spiegelachse dient.

In anderen Worten weist das erste Kraftausübungsmittel 201 einen ersten bzw. oberen geradlinig verlaufenden Abschnitt 521 und einen zweiten bzw. unteren geradlinig verlaufenden Abschnitt 522 auf. Das zweite Kraftausübungsmittel 202 weist einen ersten bzw. oberen geradlinig verlaufenden Abschnitt 523 und einen zweiten bzw. unteren geradlinig verlaufenden Abschnitt 524 auf. Die beiden oberen und unteren geradlinig verlaufenden Abschnitte 521, 522, 523, 524 des ersten und zweiten Kraftausübungsmittels 201, 202 sind derart ausgebildet, dass sie das Kettenlaschenverbindungsmittel 504 zumindest abschnittsweise umgreifen.

In der vorliegenden Ausführungsform sind die geradlinig verlaufenden Abschnitte des ersten Kraftausübungsmittels 201 und des zweiten Kraftausübungsmittels 202 so angeordnet, dass sie sich gegenüberstehen. Die sich gegenüberliegend angeordneten geradlinig verlaufenden Abschnitte 521, 522, 523, 524 bilden somit eine etwa prismenartige Form. Diese prismenartige Form ist vorteilhaft derart ausgebildet, dass bekannte sechseck-förmige Schraubenköpfe aufnehmbar sind.

Die geradlinig verlaufenden Abschnitte 521, 522, 523, 524 bilden also eine zu sechseckförmigen Schraubenköpfen komplementäre Negativform. Die geradlinig verlaufenden Abschnitte 521, 522, 523, 524 sind ausgebildet, um einen solchen Schraubenkopf zumindest abschnittsweise zu umgreifen. Der Schraubenkopf kann somit zwischen dem ersten und dem zweiten Kraftausübungsmittel 201, 202, ähnlich zu einem Schraubenschlüssel, eingespannt werden und die Schraube kann dann durch Drehen des Werkzeugfunktionselements 200 betätigt werden. Sowohl bei dem in Figur 2B gezeigten Werkzeugfunktionselement 100 als auch bei dem in Figur 4 gezeigten Werkzeugfunktionselement 200 sind die oberhalb der Mittellinie 250 angeordneten Halteabschnitte 221, 222 zueinander ausgerichtet. In anderen Worten erstreckt sich der oberhalb der Mittellinie 250 angeordnete Teil des ersten Halteabschnitts 221 in Kettenlängsrichtung zu dem zweiten Halteabschnitt 222 hin. Der oberhalb der Mittellinie 250 angeordnete Teil des zweiten Halteabschnitts 222 erstreckt sich außerdem in Kettenlängsrichtung zu dem ersten Halteabschnitt 221 hin.

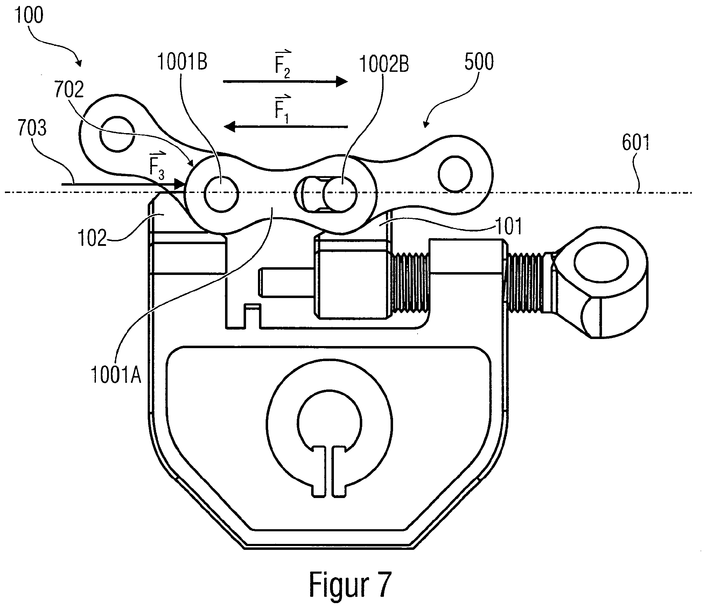

Figur 7 zeigt eine weitere Seitenansicht eines Werkzeugfunktionselements 100, an der eine Kette 500 angeordnet ist. Auch hier sind, wiederum teilweise von den Kettengliedern verdeckt, die beiden Kraftausübungsmittel 101, 102 zu erkennen. Zumindest das erste Kraftausübungsmittel 101 ist dazu ausgebildet, um eine in Kettenlängsrichtung, d.h. eine entlang der Kettenlängsachse 601, wirkende Kraft F₁, F₂ auf das Kettenlaschenverbindungsmittel 1002B auszuüben.

In der in Figur 7 gezeigten Ausführungsform stützt sich das gegenüberliegend angeordnete Kettenlaschenverbindungsmittel 1001B an dem zweiten Kraftausübungsmittel 102 ab. Dementsprechend übt das zweite Kraftausübungsmittel 102 eine Kraft auf das Kettenlaschenverbindungsmittel 1001B aus, die der von dem ersten Kraftausübungsmittel 101 auf das Kettenlaschenverbindungsmittel 1002B ausgeübten Kraft in Betrag und Richtung entgegengesetzt gerichtet ist.

Beispielsweise wird bei einer aufeinander zu gerichteten translatorischen Relativbewegung der beiden Kraftausübungsmittel 101, 102 eine Kraft F₁ von dem ersten Kraftausübungsmittel 101 auf das Kettenlaschenverbindungsmittel 1002B ausgeübt. Gleichzeitig übt das zweite Kraftausübungsmittel 102 auf das Kettenlaschenverbindungsmittel 1001B eine betragsgleiche und entgegengesetzt gerichtete Kraft F₂ aus.

In der hier gezeigten Ausführungsform üben die beiden Kraftausübungsmittel 101, 102 die jeweilige Kraft F₁, F₂ unmittelbar auf das jeweilige Kettenlaschenverbindungsmittel 1001B, 1002B aus. Wie bereits zuvor, unter anderem mit Bezug auf Figur 5, beschrieben wurde, zählen auch die Kettenrollen 504, 509 zu den Kettenlaschenverbindungsmitteln. Dementsprechend ist auch eine unmittelbar auf die Kettenrollen 504, 509 ausgeübte Kraft als eine unmittelbar auf die Kettenlaschenverbindungsmittel 1001B, 1002B ausgeübte Kraft im Kontext der vorliegenden Erfindung zu verstehen.

Es ist jedoch auch denkbar, dass zumindest eines der Kraftausübungsmittel 101, 102 die Kraft F₁, F₂ auf ein Kettenlaschenverbindungsmittel 1001B, 1002B mittelbar über eine Kettenlasche 1001A, 1002A des Kettenschnellverschlusses 1000, 502 ausübt.

Hierfür könnte beispielsweise in der in Figur 7 gezeigten Ausführungsform das erste Kraftausübungsmittel 101 die Kraft F₁ unmittelbar auf das Kettenlaschenverbindungsmittel 1002B ausüben. Das zweite Kraftausübungsmittel 102 hingegen kann beispielsweise mit der Außenseite 702 der Kettenlasche 1001A in Kontakt kommen und somit mittelbar eine, hier mit Bezugszeichen F₃ bezeichnete, Kraft 703 auf das Kettenlaschenverbindungsmittel 1001B ausüben, wobei die Kraft F₃ betragsgleich und entgegengesetzt zur Kraft F₁ gerichtet ist.

Ebenso ist es denkbar, dass zumindest eines der Kraftausübungsmittel 101, 102 die Kraft F₁, F₂ auf ein Kettenlaschenverbindungsmittel 1001B, 1002B mittelbar über ein dem Kettenschnellverschluss 1000, 502 benachbartes Kettenglied 501, 503 ausübt, wenn der Kettenschnellverschluss 1000, 502 in einer Kette 500 angeordnet ist. Hierfür könnten die beiden Kraftausübungsmittel 101, 102 derart ausgebildet sein, dass die Kräfte F₁, F₂ an den beiden dem Kettenschnellverschluss benachbarten Kettengliedern 501, 503 angreift.

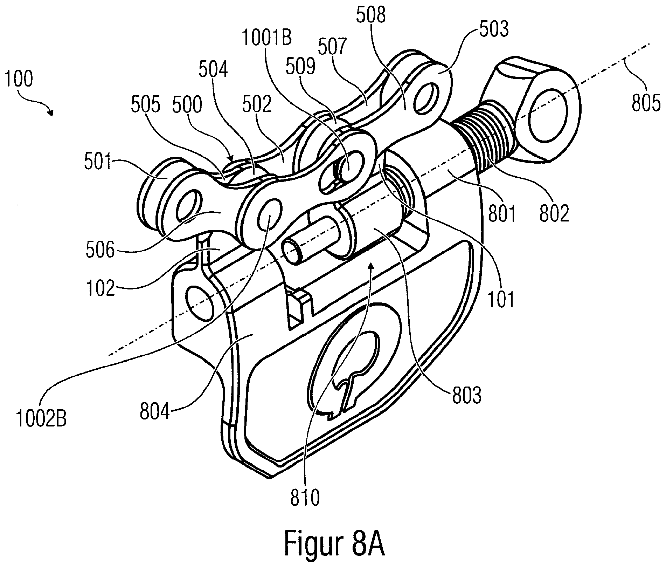

Das Werkzeugfunktionselement 100, 200 eines erfindungsgemäßen Multifunktionswerkzeugs 10 weist außerdem eine Linearführungseinrichtung auf. Eine derartige Ausführungsform ist beispielsweise in Figur 8A gezeigt.

Das Werkzeugfunktionselement 100 weist hier eine Linearführungseinrichtung 801, 802 auf. Die Linearführungseinrichtung weist ein erstes Linearführungselement 801 und ein zweites Linearführungselement 802 auf. Das erste Linearführungselement 801 ist relativ zu dem zweiten Linearführungselement 802 translatorisch bewegbar. Das, hier wiederum teils von der Kette 500 verdeckte erste Kraftausübungsmittel 101, ist an dem zweiten Linearführungselement 802 angeordnet.

Erfindungsgemäß ist lediglich eines der beiden Kraftausübungsmittel 101, 102 an dem zweiten Linearführungselement 802 angeordnet. Somit kann die Länge des zweiten Linearführungselements 802 im Vergleich zu bekannten Vorrichtungen verkürzt werden, und das gesamte Multifunktionswerkzeug 10 kann somit kompakter gestaltet werden.

In der in Figur 8A gezeigten Ausführungsform ist das zweite Linearführungselement 802 als ein Gewindebolzen ausgeführt. Das erste Linearführungselement 801 ist ein einstückig mit dem Werkzeugfunktionselement 100 ausgebildetes Lager 801. Das Lager 801 weist eine Bohrung auf, durch die der Gewindebolzen 802 hindurchgeführt ist. Die Bohrung des Lagers 801 weist ein Innengewinde auf. Das Innengewinde des Lagers 801 ist komplementär zu dem Außengewinde des Gewindebolzens 802 und steht mit diesem in Eingriff.

Das erste Linearführungselement 801 ist bezüglich des Werkzeugfunktionselements 100 stationär, d.h. es bewegt sich nicht relativ zu dem Werkzeugfunktionselement 100. Das zweite Linearführungselement 802 ist bezüglich des Werkzeugfunktionselements 100 hingegen beweglich, d.h. es ist relativ zu dem Werkzeugfunktionselement 100 bewegbar.

Als eine denkbare beispielhafte Befestigungsmöglichkeit des jeweiligen Kraftausübungsmittels 101, 102 an dem zweiten Linearführungselements 802 kann an einem stirnseitigen ersten Ende 810 des zweiten Linearführungselements bzw. des Gewindebolzens 802 eine Buchse 803 angeordnet sein. An dieser Buchse 803 ist das erste Kraftausübungsmittel 101 angeordnet.

Der Gewindebolzen 802 weist in diesem Bereich, in dem die Buchse 803 um den Gewindebolzen 802 herum angeordnet ist, vorzugsweise kein Gewinde auf. Es ist aber auch denkbar, dass der Gewindebolzen 802 auch in diesem von der Buchse 803 umgebenen Bereich ein Gewinde aufweist. Die dem Gewindebolzen zugewandte Innenseite der Buchse 803 weist kein Gewinde auf. Die Buchse 803, und somit auch das daran angeordnete erste Kraftausübungsmittel 101, ist rotatorisch bewegbar an dem Gewindebolzen 802 angebracht, das heißt die Buchse 803, bzw. das erste Kraftausübungsmittel 101, dreht bei Rotation des Gewindebolzens 802 auf diesem leer durch. Das erste Kraftausübungsmittel 101 kann somit bei Rotation des Gewindebolzens 802 in der in Figur 8A gezeigten Position verbleiben.

Bei einer Rotation des Gewindebolzens 802 um seine längs verlaufende Mittelachse 805 stützt sich der Gewindebolzen 802 an dem Lager 801 ab. Die Rotationsbewegung wird mittels der Gewindeverbindung der beiden Linearführungselemente, d.h. Gewindebolzen 802 und Lager 801, in eine Translationsbewegung des Gewindebolzens 802 umgesetzt. Dementsprechend bewegt sich auch das an dem Gewindebolzen 802 angeordnete erste Kraftausübungsmittel 101 mit dem Gewindebolzen 802 mit und führt somit ebenfalls eine Translationsbewegung aus.

Das jeweilige Kraftausübungsmittel 101, 102 ist also bewegungsgekoppelt an dem zweiten Linearführungselement 802 angeordnet, sodass sich das zweite Linearführungselement 802 und das daran angeordnete Kraftausübungsmittel 101, 102 bei Betätigung gemeinsam in dieselbe Richtung bewegen.

Beispielsweise führt bei einer Standard Rechtsgewinde-Ausführung eine Rotation des Gewindebolzens 802 im Uhrzeigersinn zu einer Translationsbewegung des Gewindebolzens 802 und des ersten Kraftausübungsmittels 101, wobei diese Translationsbewegung in Richtung des zweiten Kraftausübungsmittels 102 gerichtet ist. Das zweite Linearführungselement 802 und das daran bewegungsgekoppelt angeordnete Kraftausübungsmittel 101, 102 bewegen sich also gemeinsam auf das jeweils andere Kraftausübungsmittel 101, 102 zu. Die beiden Kraftausübungsmittel 101, 102 sind somit relativ zueinander translatorisch bewegbar.

Wie bereits erwähnt wurde, ist das zweite Linearführungselement 802 in eine erste Richtung 103 (Figur 2A) bewegbar, um den Kettenschnellverschluss 502 zu öffnen. Diese erste Bewegungsrichtung 103 ist eine aufeinander zu gerichtete Bewegungsrichtung der beiden Kraftausübungsmittel 101, 102. In Figur 8A ist zu erkennen, dass das an dem zweiten Linearführungselement 802 angeordnete Kraftausübungsmittel 101 in dieser ersten Bewegungsrichtung 103 vor dem ersten Linearführungselement 801 angeordnet ist.

Das Werkzeugfunktionselement 100 weist einen stationären Lagerabschnitt 804 auf, an dem das jeweils andere der beiden Kraftausübungsmittel 101, 102 angeordnet bzw. gelagert ist. In der in Figur 8A gezeigten Ausführungsform ist das zweite Kraftausübungsmittel 102 an dem Lagerabschnitt 804 angeordnet, während das erste Kraftausübungsmittel 101 bewegungsgekoppelt an dem zweiten Linearführungselement 802 angeordnet ist.

Der Lagerabschnitt 804 ist von dem ersten Linearführungselement 801 beabstandet. Außerdem ist der Lagerabschnitt 804 dem ersten Linearführungselement 801 entlang der Bewegungsrichtung 103 des zweiten Linearführungselements 802 gegenüberliegend angeordnet. Gemäß der abgebildeten Ausführungsform sind das erste Linearführungselement 801 und der Lagerabschnitt 804 außerdem einstückig ausgebildet.

Das heißt zwischen dem Lagerabschnitt 804 und dem zweiten Linearführungselement 802 besteht ein Freiraum mit einer lichten Weite, sodass sich das an dem zweiten Linearführungselement 802 angeordnete Kraftausübungsmittel 101, 102 in diesem Freiraum hin und her bewegen kann, und zwar um mindestens das Maß der lichten Weite.

Das zweite Linearführungselement 802 weist einen Gewindeabschnitt auf. Wie in Figur 8A zu sehen ist, erstreckt sich dieser Gewindeabschnitt lediglich durch das erste Linearführungselement 801, nicht jedoch durch den stationären Lagerabschnitt 804 hindurch.

Wie zuvor erwähnt, ist das jeweils andere der beiden Kraftausübungsmittel 101, 102, d.h. das nicht an dem zweiten Linearführungselement 802 angeordnete Kraftausübungsmittel 101, 102, an dem stationären Lagerabschnitt 804 angeordnet. Das jeweilige Kraftausübungsmittel 101, 102 kann hierbei translatorisch und/oder rotatorisch bewegbar oder fixiert an dem Lagerabschnitt 804 angeordnet sein.

In der in Figur 8A gezeigten Ausführungsform ist das zweite Kraftausübungsmittel 102 einstückig mit dem Lagerabschnitt 804 ausgebildet, d.h. das nicht an dem zweiten Linearführungselement 802 angeordnete Kraftausübungsmittel 102 ist translatorisch und rotatorisch fixiert an diesem Lagerabschnitt 804 angeordnet.

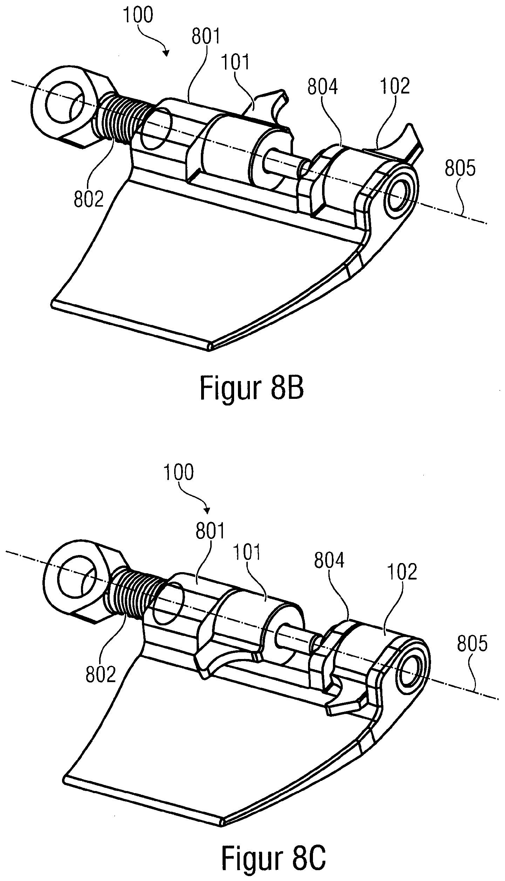

In einer in Figur 8B gezeigten alternativen Ausführungsform weist das Werkzeugfunktionselement 100 ebenfalls einen stationären Lagerabschnitt 804 auf, wobei das nicht an dem zweiten Linearführungselement 802 angeordnete Kraftausübungsmittel 102 translatorisch fixiert und rotatorisch bewegbar an diesem Lagerabschnitt 804 angeordnet ist.

Hier weist das Werkzeugfunktionselement 100 ebenfalls auf der dem ersten Linearführungselement 801 gegenüberliegenden Seite einen zweiten Lagerabschnitt 804 auf.

In diesem zweiten Lagerabschnitt 804 ist das nicht an dem zweiten Linearführungselement 802 angeordnete zweite Kraftausübungsmittel 102 gelagert. Das zweite Kraftausübungsmittel 102 ist hier translatorisch fixiert in dem Lagerabschnitt 804 gelagert. Das zweite Kraftausübungsmittel 102 ist jedoch rotatorisch bewegbar in dem Lagerabschnitt 804 gelagert, d.h. das zweite Kraftausübungsmittel 102 kann zumindest abschnittsweise um die Längsachse 805 rotieren.

So ist in Figur 8C gezeigt, wie sowohl das erste als auch das zweite Kraftausübungsmittel 101, 102 um die Längsachse 805 rotiert sind, um die beiden Kraftausübungsmittel 101, 102 einzuklappen.

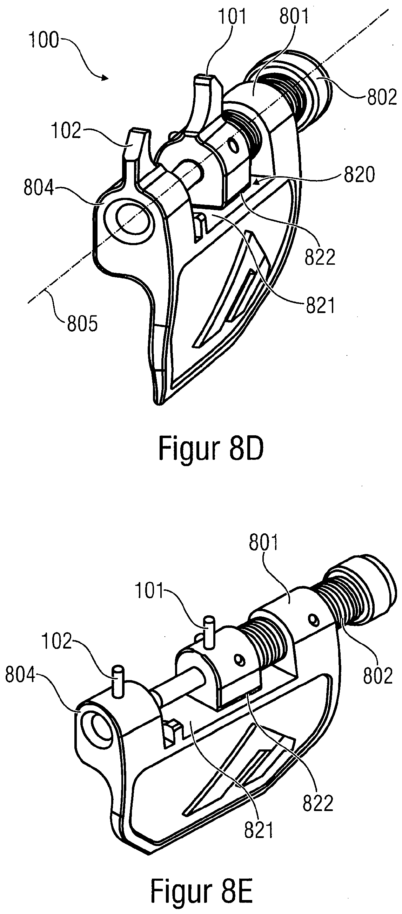

Figur 8D zeigt eine weitere Ausführungsform eines erfindungsgemäßen Werkzeugfunktionselements 100 für ein erfindungsgemäßes Multifunktionswerkzeug 10. Zwischen dem stationären ersten Linearführungselement 801 und dem gegenüberliegend angeordneten stationären Lagerabschnitt 804 ist ein Führungsabschnitt 820 ausgebildet.

Der Führungsabschnitt 820 weist eine erste Lauffläche 821 auf, die sich im Wesentlichen entlang einer Ebene erstreckt, die parallel zu den Bewegungsrichtungen 103, 104 der beiden Kraftausübungsmittel 101, 102 verläuft. In anderen Worten erstreckt sich diese Ebene in Kettenlängsrichtung, wenn eine Kette zum Öffnen bzw. Schließen in das Werkzeugfunktionselement 100 eingelegt ist.

Das an dem zweiten Linearführungselement 802 angeordnete Kraftausübungsmittel 101 weist auf dessen Unterseite, d.h. auf der der Kette abgewandten Seite, eine zu der ersten Lauffläche 821 komplementäre zweite Lauffläche 822 auf. Bei einer Bewegung des an dem zweiten Linearführungselement 802 angeordneten Kraftausübungsmittels 101 gleitet dieses also mit dessen Lauffläche 822 auf der zwischen dem stationären Lagerabschnitt 804 und dem stationären ersten Linearführungselement 801 ausgebildeten Lauffläche 821.

Das an dem zweiten Linearführungselement 802 angeordnete Kraftausübungsmittel 101 stützt sich somit mittels der beiden Laufflächen 821, 822 gegen eine Rotation, d.h. gegen ein Verkippen, um die Längsachse 805 ab.

Figur 8E zeigt eine etwas schrägere Ansicht auf das Werkzeugfunktionselement 100 mit den zuvor erwähnten Laufflächen 821, 822. Außerdem sind die beiden Kraftausübungsmittel 101, 102 hier lediglich als Stifte ausgebildet. Diese Stifte 101, 102 bieten eine einfache Möglichkeit zur Realisierung eines Kraftausübungsmittels.

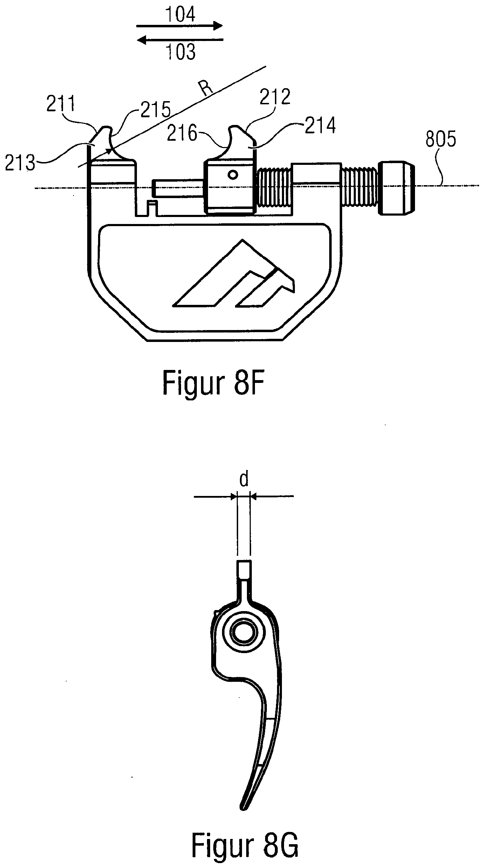

Die Figuren 8F und 8G zeigen weitere Ansichten auf ein erfindungsgemäßes Werkzeugfunktionselement 100 für ein erfindungsgemäßes Multifunktionswerkzeug 10. Die zuvor mit Bezug auf die Figuren 2A und 2B erwähnten Aufnahmeabschnitte 211, 212 bzw. Eingriffsabschnitte 213, 214 weisen eine orthogonal zur Linearbewegungsrichtung 103, 104 bzw. zur Längsachse 805, zu bemessende Dicke d (Figur 8G) zwischen 1 mm und 2 mm auf. Gemäß eines Ausführungsbeispiels beträgt die Dicke 1,8 mm.

Außerdem weisen die Kontaktabschnitte 215, 216 einen Radius R auf, der zwischen 3,5 mm und 4,0 mm, vorzugsweise zwischen 3,7 mm und 3,9 mm, und weiter bevorzugt 3,8 mm beträgt.

Ein weiteres Beispiel eines eine Linearführungseinrichtung aufweisenden Werkzeugfunktionselements 100 ist in Figur 3 gezeigt.

Hier weist das Werkzeugfunktionselement 200 eine Linearführungseinrichtung 301, 302 auf, wobei die Linearführungseinrichtung 301, 302 ein erstes Linearführungselement 301 und ein zweites Linearführungselement 302 aufweist. Das erste Linearführungselement 301 ist relativ zu dem zweiten Linearführungselement 302 translatorisch bewegbar. Das erste Kraftausübungsmittel 201 ist an dem ersten Linearführungselement 301 angeordnet.

Die Linearführungseinrichtung 301, 302 weist ferner ein drittes Linearführungselement 303 auf, an dem das zweite Kraftausübungsmittel 202 angeordnet ist.

In der in Figur 3 gezeigten Ausführungsform ist das zweite Linearführungselement 302 als ein Bolzen ausgebildet. Das erste und das dritte Linearführungselement 301, 303 sind als Buchsen ausgebildet, die auf dem Bolzen 302 gleiten können. Gemäß einem Ausführungsbeispiel sind beide Buchsen 301, 303 gleitend auf dem Bolzen 302 angeordnet. Beide Buchsen 301, 303 können somit sowohl in eine erste Richtung 203, als auch in eine entgegengesetzte zweite Richtung 204 translatorisch bewegt werden.

Die erste Buchse 301 weist ferner auf der dem ersten Kraftausübungsmittel 201 gegenüberliegenden Seite ein Betätigungselement 320 auf. Auf das Betätigungselement 320 kann eine Kraft 314 ausgeübt werden, wodurch sich die erste Buchse 301, auf dem Bolzen 302 gleitend, in Richtung 204 zu der zweiten Buchse 303 hin bewegt. Eine der Kraft 314 entgegengesetzt gerichtete und auf das Betätigungselement 320 ausgeübte Kraft bewirkt dementsprechend, dass sich die erste Buchse 301, auf dem Bolzen 302 gleitend, in Richtung 203 von der zweiten Buchse 303 weg bewegt.

Zusammen mit den Buchsen 301, 303 bewegen sich auch die an den Buchsen 301, 303 angeordneten Kraftausübungsmittel 201, 202 relativ zueinander. Die beiden Buchsen 301, 303 und die beiden Kraftausübungsmittel 201, 202 bewegen sich hierbei translatorisch entlang einer gemeinsamen Translationsachse 318.

Zur Begrenzung der Translationsbewegungen der Buchsen 301, 303 können Begrenzer oder Endanschläge vorgesehen sein. So begrenzt beispielsweise eine auf einer ersten Stirnseite 308 des Bolzens 302 angeordnete Scheibe 304 die Translationsbewegung der zweiten Buchse 303 in die zweite Richtung 204. An einem Endabschnitt 305 der gegenüberliegenden Stirnseite des Bolzens 302 kann beispielsweise ein (hier nicht gezeigter) Sicherungsring, Splint oder dergleichen angeordnet sein, um die Translationsbewegung der ersten Buchse 301 in die erste Richtung 203 zu begrenzen.

Gemäß einer weiteren Ausführungsform kann der Bolzen 302 zumindest abschnittsweise ein Außengewinde aufweisen. Gemäß dieser Ausführungsform kann der Bolzen 302 als ein Gewindebolzen ausgebildet sein. Das Außengewinde kann sich beispielsweise von dem Endabschnitt 305 bis etwa zu einer gegenüberliegenden Stirnseite 309 der zweiten Buchse 303 erstrecken. Der Abschnitt des Bolzens 302, der von der zweiten Buchse 303 umgeben ist, kann somit also ein Abschnitt ohne Außengewinde sein. Die zweite Buchse 303 ist daher zumindest rotatorisch um den Bolzen 302 bewegbar. Die zweite Buchse 303 kann aber auch rotatorisch um den Bolzen 302 bewegbar sein, wenn der Bolzen 302 ein Gewinde an dem von der zweiten Buchse 303 umgebenen Abschnitt aufweist. Die zweite Buchse 303 weist kein Innengewinde auf, weshalb sie nicht mit dem Außengewinde des Bolzens 302 in Eingriff steht. Bei einer Rotation des Bolzens 302 dreht die zweite Buchse 303 sozusagen leer durch. Die zweite Buchse 303 dreht aufgrund ihrer rotatorischen Bewegbarkeit, wegen ihres fehlenden Innengewindes, nicht mit dem Bolzen 302 mit. Die zweite Buchse 303 kann bei Rotation des Bolzens 302 somit an der in Figur 3 gezeigten Position verbleiben.

Die erste Buchse 301 hingegen weist gemäß dieses Ausführungsbeispiels ein an ihrer durchgehenden Innenbohrung 310 ausgebildetes Innengewinde auf. Das Innengewinde der ersten Buchse 301 steht mit dem Außengewinde des Bolzens 302 in Eingriff. Bei einer Rotation des Gewindebolzens 302 um seine Mittelachse 318 verschiebt sich somit die erste Buchse 301, je nach Rotationsrichtung des Bolzens 302, in die erste oder die zweite Richtung 203, 204 aufgrund der vorgenannten miteinander in Eingriff stehenden Gewinde. Die Gewindeverbindung wandelt also die Rotation des Bolzens 302 in eine Translationsbewegung der ersten Buchse 301 um.

Die erste Buchse 301 und das daran angeordnete erste Kraftausübungsmittel 201 bewegen sich hierbei translatorisch entlang einer gemeinsamen Translationsachse 318. Beide Buchsen 301, 303 und die beiden Kraftausübungsmittel 201, 202 bewegen sich somit translatorisch relativ zueinander entlang der gemeinsamen Translationsachse 318.

Zum Abstützen der ersten Buchse 301 gegen die Rotationsbewegung des Bolzens 302 kann eine der Rotation entgegengesetzte Haltekraft 312 auf das Betätigungselement 320 ausgeübt werden.

Zur Ausführung der Rotation des Bolzens 302 kann der Bolzen 302 an seiner ersten Stirnseite 308 ein Betätigungselement 311 aufweisen. Hierbei kann es sich um einen Schraubenkopf 311 mit bekannter Eingriffsstruktur, wie beispielsweise Inbus, Torx oder dergleichen handeln. Gemäß den oben beschriebenen Ausführungsformen kann also mindestens eine der beiden Buchsen 301, 303 entlang des Bolzens 302 gleiten, oder mindestens eine der beiden Buchsen 301, 302 kann zusammen mit dem Bolzen 302 eine eingreifende Gewindeverbindung aufweisen. In beiden Fällen ist das an der ersten Buchse 301 angeordnete erste Kraftausübungsmittel 101, 201 relativ zu dem an der zweiten Buchse 302 angeordneten zweiten Kraftausübungsmittel 102, 202 translatorisch bewegbar.

Um die zuvor beschriebenen Werkzeugfunktionselemente 100, 200 an einem erfindungsgemäßen Multifunktionswerkzeug 10 anzubringen, können die Werkzeugfunktionselemente 100, 200 Anbringungsabschnitte aufweisen.

Wie in Figur 9 zu erkennen ist, weist das Werkzeugfunktionselement 100 einen Anbringungsabschnitt 901 auf. Der Anbringungsabschnitt 901 ist ausgebildet, um das Werkzeugfunktionselement 100 an einem (in den Figuren 1A bis 1G gezeigten) Multifunktionswerkzeug 10 anzubringen. Beispielsweise kann der Anbringungsabschnitt 901 hierfür eine Öse 902 mit einer Öffnung 903 aufweisen, wobei die Öse 902 an einen an dem Multifunktionswerkzeug 10 vorgesehenen Stift bzw. Bolzen 13 anbringbar ist. An diesem Stift bzw. Bolzen 13 können weitere Werkzeugfunktionselemente bzw. Bits angebracht sein.

Das Werkzeugfunktionselement 100 weist außerdem einen Nietdrückstift 904 auf. Der Nietdrückstift 904 kann an der Buchse 905 angeordnet sein. Der Nietdrückstift 904 kann alternativ an dem dem zweiten Kraftausübungsmittel 102 zugewandten stirnseitigen Ende des Gewindebolzens 906 vorgesehen sein. In diesem Fall weist die Buchse 905 ein Loch auf, durch welches der Nietdrückstift 904 hindurchgeführt ist.

Mit diesem, den Nietdrückstift 904 aufweisenden Werkzeugfunktionselement 100 kann eine vernietete Kette 500A geöffnet beziehungsweise vernietet werden. Mit diesem Werkzeugfunktionselement 100 kann auch, gegebenenfalls gleichzeitig, ein Kettenschnellverschluss 502 bzw. eine einen Kettenschnellverschluss 502 aufweisende Kette, geöffnet bzw. geschlossen werden.

Nachdem die strukturellen Merkmale der erfindungsgemäßen Vorrichtung beschrieben wurden, soll nachfolgend die Funktionsweise des erfindungsgemäßen Multifunktionswerkzeugs 10 mit Werkzeugfunktionselement 100, 200 unter Bezugnahme auf die Figuren 1H, 2A und 8A bis 8G näher erläutert werden. In dem in den Figuren gezeigten Beispiel ist das Öffnen beziehungsweise Schließen einer einen Kettenschnellverschluss 502 aufweisenden Kette 500 gezeigt, wobei die Kette 500 nur ausschnittsweise mit drei Kettengliedern 501, 502, 503 abgebildet ist. Das erfindungsgemäße Multifunktionswerkzeug 10 eignet sich jedoch auch zum Öffnen beziehungsweise Schließen eines Kettenschnellverschlusses 502, 1000, der nicht zwangsläufig in einer Kette angeordnet sein muss.

In dem in Figur 8A gezeigten Beispiel ist eine mit einem Kettenschnellverschluss 502 verschlossene Kette 500 gezeigt. Der Kettenschnellverschluss 502, und somit die Kette 500, soll mit dem Multifunktionswerkzeug 10 bzw. dem daran angeordneten Werkzeugfunktionselement 100 geöffnet werden. Hierfür wird die Kette 500 zunächst, wie in Figur 8A abgebildet, in das Werkzeugfunktionselement 100 eingelegt.

Das Werkzeugfunktionselement 100 weist hierfür die in Figur 2A gezeigten Aufnahmeabschnitte 211, 212 auf. Die Kette 500 wird derart auf die Aufnahmeabschnitte 211, 212 aufgelegt, dass die beiden Laschen 507, 508 des dritten Kettenglieds 503 den ersten Aufnahmeabschnitt 211 umgeben, während die beiden Laschen 505, 506 des ersten Kettenglieds 501 den zweiten Aufnahmeabschnitt 212 umgeben. Die beiden Kettenglieder 501, 503 sind somit von den Aufnahmeabschnitten 211, 212 aufgenommen und werden von diesen gegen ein Verkippen entlang der Kettenlängsachse 203 gesichert.

Die beiden Kraftausübungsmittel 101, 102 können dann relativ zueinander translatorisch aufeinander zu bewegt werden. Hierfür wird der Gewindebolzen 202 betätigt. Der Gewindebolzen 202 wird gedreht und stützt sich hierbei in dem mit einem korrespondierenden Innengewinde versehenen Lager 201 ab. Die Drehung des Gewindebolzens 202 wird somit in eine Translationsbewegung des Gewindebolzens 202 umgesetzt. Das an der dem zweiten Kraftausübungsmittel 102 zugewandten stirnseitigen Ende des Gewindebolzens 202 angebrachte erste Kraftausübungsmittel 101 wird somit ebenfalls translatorisch bewegt.

Bei einem Standard-Rechtsgewinde wird beispielsweise eine im Uhrzeigersinn erfolgende Rotation des Gewindebolzens 202 in eine zu dem zweiten Kraftausübungsmittel 102 hin gerichtete Translationsbewegung des Gewindebolzens 202 umgesetzt. Dementsprechend bewegt sich auch das an dem Gewindebolzen 202 angeordnete erste Kraftausübungsmittel 101 translatorisch zu dem zweiten Kraftausübungsmittel 102 hin. Diese aufeinander zu gerichtete Bewegung der beiden Kraftausübungsmittel 101, 102 erfolgt zunächst solange, bis die Kontaktabschnitte 215, 216 mit den Kettenrollen 504, 509 in Kontakt kommen.

Der erste Kontaktabschnitt 215 kommt mit der zwischen dem Kettenschnellverschluss 502 und dem dritten Kettenglied 503 angeordneten Kettenrolle 509 in Kontakt. Der zweite Kontaktabschnitt 216 kommt mit der zwischen dem Kettenschnellverschluss 502 und dem ersten Kettenglied 501 angeordneten Kettenrolle 504 in Kontakt.

Die Kontaktabschnitte 215, 216 weisen einen Radius auf, der im Wesentlichen dem Radius der Kettenrollen 504, 509 entspricht. Dadurch kann die Kette 500 form- bzw. passgenau von dem Werkzeugfunktionselement 100 aufgenommen werden.

Die Kette 500 befindet sich nunmehr also in der in Figur 8A gezeigten Position an dem Werkzeugfunktionselement 100. Die Eingriffsabschnitte 213, 214 sind mit dem jeweiligen Kettenlaschen-Zwischenraum des ersten bzw. dritten Kettenglieds 501, 503 in Eingriff und die Kontaktabschnitte 215, 216 sind mit den Kettenrollen 504, 509 in Kontakt.

Ab diesem Zeitpunkt wird durch weitere Rotation des Gewindebolzens 202, und somit durch die weiter erfolgende relative Translationsbewegung der beiden Kraftausübungselemente 101, 102 in Richtung zueinander, eine Kraft auf den Kettenschnellverschluss 502 ausgeübt. Genauer gesagt üben die Kraftausübungselemente 101, 102 eine Kraft auf die Kettenrollen 504, 509 aus. Die Kettenrollen 504, 509 sind bei der gezeigten Kette 500 Bestandteil je eines Kettenlaschenverbindungsmittels.

Um ein Verkippen 241 (Figur 2C) des Kettenschnellverschlusses 502 entlang einer quer zur Kettenlängsachse 203 gerichteten Achse 240 zu vermeiden, umgreifen die oberhalb der in Kettenlängsachse 203 verlaufenden Mittellinie 250 (Figur 2B) des Kettenschnellverschlusses 502 angeordneten Halteabschnitte 221, 222 die Kettenrollen 504, 509.

Die Halteabschnitte 221, 222 dienen außerdem dazu, ein aus dem Werkzeugfunktionselement 100 hinaus gerichtetes 230 Herausgleiten (Figur 2D) des Kettenschnellverschlusses 502 zu vermeiden

Die Halteabschnitte 221, 222 sind insbesondere dann von Vorteil, wenn der Kettenschnellverschluss 502 nicht in einer Kette 500 angeordnet ist und als alleinstehendes Teil geöffnet bzw. verschlossen werden soll. Sofern der Kettenschnellverschluss 502 nämlich in einer Kette 500 angeordnet ist, können bereits die mit den benachbarten Kettengliedern 501, 503 in Eingriff stehenden Eingriffsabschnitte 213, 214 ein Verkippen 241 bzw. Herausgleiten 230 des Kettenschnellverschlusses 502 verhindern.

Der Gewindebolzen 202 wird also nun weiter rotiert, so dass das erste Kraftausübungsmittel 101 sich translatorisch weiter in Richtung des zweiten Kraftausübungsmittels 102 bewegt. Das erste Kraftausübungsmittel 101 übt nun eine Kraft F₁ (Figur 7) auf die zwischen dem Kettenschnellverschluss 502 und dem dritten Kettenglied 503 angeordnete Kettenrolle 509 aus. Das zweite Kraftausübungsmittel 102 übt eine Kraft F₂ (Figur 7) auf die zwischen dem Kettenschnellverschluss 502 und dem ersten Kettenglied 501 angeordnete Kettenrolle 504 aus. Die beiden Kräfte F₁, F₂ sind betragsgleich und entgegengesetzt gerichtet.

Die beiden Kräfte F₁, F₂ sind derart gerichtet, dass die beiden Kettenrollen 504, 509 aufeinander zu gezwungen werden. Durch diese beiden auf die beiden Kettenrollen 504, 509 ausgeübten Kräfte F₁, F₂ werden also die Kettenrollen 504, 509 aufeinander zu bewegt. Genauer gesagt gleiten die beiden Bolzen 1001B, 1002B des Kettenschnellverschlusses 502 in den Langlöchern der jeweils gegenüberliegenden Lasche des Kettenschnellverschlusses 502 in einer aufeinander zu gerichteten Richtung.

Der Gewindebolzen 202 wird nun solange weiter betätigt, bis die beiden Bolzen 1001B, 1002B des Kettenschnellverschlusses 502, aufgrund der translatorischen Relativbewegung der beiden Kraftausübungsmittel 101, 102 zueinander, in den in dem jeweiligen Langloch vorgesehenen Bereich mit vergrößertem Durchmesser gelangen. Sobald die Bolzen 1001B, 1002B in diesem Bereich mit vergrößertem Durchmesser angelangt sind, können die beiden Kettenlaschen des Kettenschnellverschlusses 502 lateral voneinander weg bewegt werden. Der Kettenschnellverschluss 502 ist dann geöffnet.

Das Werkzeugfunktionselement 100 kann auch dafür genutzt werden, um den Kettenschnellverschluss 502 zu verschließen. Hierfür böte es sich an, die beiden Kraftausübungsmittel 101, 102 in den Kettenlaschen-Zwischenraum des Kettenschnellverschlusses 502 einzuführen, so dass das erste Kraftausübungsmittel 101 innenseitig mit der Kettenrolle 509 in Kontakt kommt, und das zweite Kraftausübungsmittel 102 innenseitig mit der Kettenrolle 504 in Kontakt kommt.

Genauer gesagt weisen sowohl die zwischen dem Kettenschnellverschluss 502 und dem dritten Kettenglied 503 angeordnete Kettenrolle 509, als auch die zwischen dem Kettenschnellverschluss 502 und dem ersten Kettenglied 501 angeordnete Kettenrolle 504 jeweils eine dem Kettenlaschen-Zwischenraum zugewandte Seite auf. Diese Seiten liegen sich außerdem gegenüber. Das erste Kraftausübungsmittel 101 kommt mit der dem Kettenlaschen-Zwischenraum zugewandten Seite der zwischen dem Kettenschnellverschluss 502 und dem dritten Kettenglied 503 angeordneten Kettenrolle 509 in Kontakt. Das zweite Kraftausübungsmittel 102 kommt mit der dem Kettenlaschen-Zwischenraum zugewandten Seite der zwischen dem Kettenschnellverschluss 502 und dem ersten Kettenglied 501 angeordneten Kettenrolle 504 in Kontakt.

Das Werkzeugfunktionselement 100 kann nun betätigt werden, indem der Gewindebolzen 202 in die der zuvor beschriebenen Richtung entgegengesetzte Richtung rotiert wird. Bei einem Standard-Rechtsgewinde wird der Gewindebolzen 202, 802 also entgegen dem Uhrzeigersinn gedreht. Dies führt wiederum zu einer relativen Translationsbewegung der beiden Kraftausübungselemente 101, 102, wobei diese relative Translationsbewegung nun derart gerichtet ist, dass sich die beiden Kraftausübungselemente 101, 102 voneinander weg bewegen.

Die Kraftausübungsmittel 101, 102 üben dabei wiederum eine Kraft F₁, F₂ auf die jeweiligen Kettenrollen 504, 509 aus. Die beiden Kettenrollen 504, 509 bewegen sich somit ebenfalls voneinander weg. Die Bolzen 1001B, 1002B des Kettenschnellverschlusses 502 gleiten entlang des in den jeweiligen Langlöchern vorgesehenen Abschnitts mit reduziertem Durchmesser bis zu dessen Anschlag. Der Kettenschnellverschluss 502 ist somit geschlossen. Wie insbesondere in Figur 11 zu sehen ist, weisen die in den Langlöchern 1011 vorgesehenen Abschnitte 1014 mit reduziertem Durchmesser einen geradlinigen bzw. linearen Abschnitt 1015 auf. In diesem linearen Abschnitt 1015 gleiten die Bolzen 1001B, 1002B somit ebenfalls geradlinig bzw. linear. Eine mit dem Werkzeugfunktionselement 100, 200 ausgeübte lineare Translationsbewegung ist daher zum Betätigen, d.h. zum Öffnen bzw. Schließen, eines Kettenschnellverschlusses 502, 1000 gut geeignet. Bei Kettenzangen hingegen wird aufgrund der relativen Rotationsbewegung der beiden Kettenzangenhälften zueinander stets eine Kraftkomponente auf die Bolzen ausgeübt, die nicht mit der linearen Richtung der Langlöcher übereinstimmt. In anderen Worten, mit Bezug auf Figur 11, bedeutet dies, dass zu den horizontalen Kräften F₁, F₂ bei Kettenzangen stets zusätzlich eine (hier nicht dargestellte) vertikale Kraftkomponente hinzukommt.

## Patentansprüche

1. Tragbares Multifunktionswerkzeug (10) mit
einem Griffabschnitt (11) und einem Werkzeugaufnahmeabschnitt (12), an dem mindestens ein Werkzeugfunktionselement (100, 200) angeordnet ist,
wobei das Werkzeugfunktionselement (100, 200) ausgebildet ist, um einen Kettenschnellverschluss (502, 1000) mit zwei Kettenlaschen (1001A, 1002A) und zwei Kettenlaschenverbindungsmitteln (1001B, 1002B) zu betätigen, und wobei das Werkzeugfunktionselement (100, 200) aufweist:
ein erstes Kraftausübungsmittel (101, 201), das ausgebildet ist, um eine Kraft (F₁, F₂) auf das erste Kettenlaschenverbindungsmittel (1001B) des Kettenschnellverschlusses (502, 1000) auszuüben, und
ein zweites Kraftausübungsmittel (102, 202), das ausgebildet ist, um eine Kraft (F₁, F₂) auf das zweite Kettenlaschenverbindungsmittel (1002B) des Kettenschnellverschlusses (502, 1000) auszuüben,
wobei das erste Kraftausübungsmittel (101, 201) und das zweite Kraftausübungsmittel (102, 202) relativ zueinander translatorisch bewegbar sind, um den Kettenschnellverschluss (502, 1000) mittels dieser translatorischen Bewegung zu betätigen,
wobei das Werkzeugfunktionselement (100, 200) eine Linearführungseinrichtung (801, 802) mit einem stationären ersten Linearführungselement (801) und einem darin beweglich angeordneten zweiten Linearführungselement (802) aufweist, wobei lediglich eines der beiden Kraftausübungsmittel (101, 201; 102, 202) auf dem zweiten Linearführungselement (802) angeordnet ist,
wobei zumindest eines der beiden Kraftausübungsmittel (101, 102; 201, 202) einen Aufnahmeabschnitt (211, 212) zum Aufnehmen des Kettenschnellverschlusses (502, 1000) aufweist, wobei der Aufnahmeabschnitt (211, 212) ausgebildet ist, um ein Verkippen (602) des Kettenschnellverschlusses (502, 1000) entlang der Kettenlängsachse (601) zu vermeiden,
wobei der Aufnahmeabschnitt (211, 212) einen Eingriffsabschnitt (213, 214) aufweist, der ausgebildet ist, um zwischen zwei Kettenlaschen (505, 506; 507, 508) eines dem Kettenschnellverschluss (502, 1000) benachbarten Kettenglieds (501, 503) einzugreifen, wenn der Kettenschnellverschluss (502, 1000) in einer Kette (500) angeordnet ist, und
wobei das Werkzeugfunktionselement (100, 200) ferner einen Nietdrückstift (904) zum Öffnen und Vernieten einer vernieteten Kette (500A) aufweist.

2. Tragbares Multifunktionswerkzeug (10) nach Anspruch 1, wobei das eine der beiden Kraftausübungsmittel (101, 201; 102, 202) bewegungsgekoppelt an dem zweiten Linearführungselement (802) angeordnet ist, sodass sich das zweite Linearführungselement (802) und das daran angeordnete Kraftausübungsmittel (101, 201; 102, 202) gemeinsam in dieselbe Richtung bewegen.

3. Tragbares Multifunktionswerkzeug (10) nach Anspruch 1 oder 2, wobei sich das zweite Linearführungselement (802) und das daran angeordnete Kraftausübungsmittel (101, 201; 102, 202) gemeinsam auf das jeweils andere Kraftausübungsmittel (101, 201; 102, 202) zu bewegen.

4. Tragbares Multifunktionswerkzeug (10) nach einem der vorhergehenden Ansprüche, wobei das zweite Linearführungselement (802) in eine erste Richtung (103) bewegbar ist, um den Kettenschnellverschluss (502, 1000) zu öffnen, und das an dem zweiten Linearführungselement (802) angeordnete Kraftausübungsmittel (101, 201; 102, 202) in dieser ersten Bewegungsrichtung (103) vor dem ersten Linearführungselement (801) angeordnet ist.

5. Tragbares Multifunktionswerkzeug (10) nach einem der vorhergehenden Ansprüche, wobei das Werkzeugfunktionselement (100, 200) einen stationären Lagerabschnitt (804) aufweist, an dem das jeweils andere der beiden Kraftausübungsmittel (102, 202) gelagert ist, wobei der Lagerabschnitt (804) von dem ersten Linearführungselement (801) beabstandet und diesem entlang der Bewegungsrichtung (103, 104) des zweiten Linearführungselements (802) gegenüberliegend angeordnet ist, und/oder wobei das zweite Linearführungselement (802) einen Gewindeabschnitt aufweist, der sich durch das erste Linearführungselement (801) und nicht durch den stationären Lagerabschnitt (804) hindurch erstreckt, und/oder wobei das stationäre erste Linearführungselement (801) und der stationäre Lagerabschnitt (804) einstückig ausgebildet sind.

6. Tragbares Multifunktionswerkzeug (10) nach einem der vorhergehenden Ansprüche, wobei zwischen dem stationären ersten Linearführungselement (801) und dem stationären Lagerabschnitt (804) ein Führungsabschnitt (820) ausgebildet ist, der eine erste Lauffläche (821) aufweist, und wobei das an dem zweiten Linearführungselement (802) angeordnete Kraftausübungsmittel (101, 201; 102, 202) eine dazu komplementäre zweite Lauffläche (822) aufweist, wobei die beiden Laufflächen (821, 822) das Kraftausübungsmittel (101, 201; 102, 202) bei einer Linearbewegung (103, 104) gegen eine Rotation um die sich in Bewegungsrichtung (103, 104) erstreckende Längsachse (805) abstützen.

7. Tragbares Multifunktionswerkzeug (10) nach einem der vorhergehenden Ansprüche, wobei der Aufnahmeabschnitt (211, 212) und/oder der Eingriffsabschnitt (213, 214) eine orthogonal zur Linearbewegungsrichtung zu bemessende Dicke (d) zwischen 1 mm und 2 mm aufweist.

8. Tragbares Multifunktionswerkzeug (10) nach einem der vorhergehenden Ansprüche, wobei der Aufnahmeabschnitt (211, 212) einen Kontaktabschnitt (215, 216) aufweist, der mit einem Kettenlaschenverbindungsmittel (1001B, 1002B; 504, 509) eines Kettenschnellverschlusses (502, 1000) in Kontakt bringbar ist, wobei der Kontaktabschnitt (215, 216) einen Radius (R₁, R₂) aufweist, der im Wesentlichen dem Radius des Kettenlaschenverbindungsmittels (1001B, 1002B; 504, 509) entspricht, und/oder wobei der Radius (R₁, R₂) zwischen 3,5 mm und 4,0 mm, vorzugsweise zwischen 3,7 mm und 3,9 mm, und weiter bevorzugt 3,8 mm beträgt.

9. Multifunktionswerkzeug (10) nach einem der vorhergehenden Ansprüche, wobei der Werkzeugaufnahmeabschnitt (12) einen Bolzen (13) aufweist, der sich quer zu einer Haupterstreckungsrichtung (X₁) des Griffabschnitts (11) erstreckt, und wobei das mindestens eine Werkzeugfunktionselement (100, 200) an diesem Bolzen (13) angeordnet ist, und/oder wobei das mindestens eine Werkzeugfunktionselement (100, 200) einen Anbringungsabschnitt (901) aufweist, mittels dem das Werkzeugfunktionselement (100, 200) an dem Bolzen (13) angebracht ist, wobei der Anbringungsabschnitt (901) eine Öffnung (903) aufweist, durch die der Bolzen (13) durchführbar ist.

10. Multifunktionswerkzeug (10) nach einem der vorhergehenden Ansprüche, wobei das mindestens eine Werkzeugfunktionselement (100, 200) drehbar an dem Werkzeugaufnahmeabschnitt (12) angeordnet ist.

11. Multifunktionswerkzeug (10) nach einem der vorhergehenden Ansprüche, wobei der Werkzeugaufnahmeabschnitt (12) zweigeteilt (12a, 12b) ist und der Anbringungsabschnitt (901) des mindestens einen Werkzeugfunktionselements (100, 200) zwischen den beiden Teilen (12a, 12b) des Werkzeugaufnahmeabschnitts (12) angeordnet ist.

12. Multifunktionswerkzeug (10) nach einem der vorhergehenden Ansprüche, wobei der Griffabschnitt (11) zweigeteilt ist, wobei der erste Teil (11a) des Griffabschnitts (11) einstückig mit einem ersten Teil (12a) des Werkzeugaufnahmeabschnitts (12) und der zweite Teil (11b) des Griffabschnitts (11) einstückig mit einem zweiten Teil (12b) des Werkzeugaufnahmeabschnitts (12) ausgebildet ist.

13. Multifunktionswerkzeug (10) nach einem der vorhergehenden Ansprüche, wobei das Multifunktionswerkzeug (10) einen zweiten Werkzeugaufnahmeabschnitt (14) aufweist, der dem ersten Werkzeugaufnahmeabschnitt (12) gegenüberliegend angeordnet ist.

14. Multifunktionswerkzeug (10) nach Anspruch 13, wobei der erste und der zweite Werkzeugaufnahmeabschnitt (12, 14) eine gemeinsame Schnittachse (16) aufweisen, die parallel zu der Haupterstreckungsrichtung (X₁) des Griffabschnitts (11) verläuft, oder wobei der erste und der zweite Werkzeugaufnahmeabschnitt (12, 14) eine gemeinsame Schnittachse (16) aufweisen, die schräg zu der Haupterstreckungsrichtung (X₁) des Griffabschnitts (11) und durch den Mittelpunkt (18) des Griffabschnitts (11) verläuft.

## Claims

1. Portable multifunctional tool (10) comprising
a handle portion (11) and a tool accommodating portion (12) having at least one tool function element (100, 200) arranged thereon,
the tool function element (100, 200) being configured to actuate a quick release chain fastener (502, 1000) comprising two chain link plates (1001A, 1002A) and two chain link plate connection means (1001B, 1002B), and the tool function element (100, 200) comprising:
first force exertion means (101, 201) configured to exert a force (F₁, F₂) on the first chain link plate connection means (1001B) of the quick release chain fastener (502, 1000), and
second force exertion means (102, 202) configured to exert a force (F₁, F₂) on the second chain link plate connection means (1002B) of the quick release chain fastener (502, 1000),
the first force exertion means (101, 201) and the second force exertion means (102, 202) being translationally moveable in relation to each other so as to actuate the quick release chain fastener (502, 1000) by means of this translational movement, and
the tool function element (100, 200) comprising linear guide means (801, 802) having a stationary first linear guide element (801) and a second linear guide element (802) movably arranged within the former, at least one of the two force exertion means (101, 201; 102, 202) being arranged on the second linear guide element (802),
wherein at least one of the two force exertion means (101, 102; 201, 202) comprises an accommodating portion (211, 212) for accommodating the quick release chain fastener (502, 1000), said accommodating portion (211, 212) being configured to avoid tilting (602) of the quick release chain fastener (502, 1000) along the longitudinal chain axis (601),
wherein the accommodating portion (211, 212) comprises an engagement portion (213, 214) configured to engage between two chain link plates (505, 506; 507, 508) of a chain link (501, 503) adjacent to the quick release chain fastener (502, 1000) when the quick release chain fastener (502, 1000) is arranged within a chain (500), and
wherein the tool function element (100, 200) further comprises a rivet breaking pin (904) for opening and riveting a riveted chain (500A).

2. Portable multifunctional tool (10) as claimed in claim 1, wherein the one of the two force exertion means (101, 201; 102, 202) is arranged on the second linear guide element (802) in a motion-coupled manner, so that the second linear guide element (802) and the force exertion means (101, 201; 102, 202) arranged thereon together move in the same direction.

3. Portable multifunctional tool (10) as claimed in claim 1 or 2, wherein the second linear guide element (802) and the force exertion means (101, 201; 102, 202) arranged thereon together move toward the respectively other force exertion means (101, 201; 102, 202).

4. Portable multifunctional tool (10) as claimed in any of the preceding claims, wherein the second linear guide element (802) is movable in a first direction (103) so as to open the quick release chain fastener (502, 1000), and the force exertion means (101, 201; 102, 202) arranged on the second linear guide element (802) is arranged in front of the first linear guide element (801) in this first direction of movement (103).

5. Portable multifunctional tool (10) as claimed in any of the preceding claims, wherein the tool function element (100, 200) comprises a stationary bearing portion (804) which has the respectively other one of the two force exertions means (102, 202) mounted thereon, the bearing portion (804) being spaced apart from the first linear guide element (801) and being arranged opposite thereof along the direction of movement (103, 104) of the second linear guide element (802), and/or wherein the second linear guide element (802) comprises a threaded portion extending through the first linear guide element (801) but not through the stationary bearing portion (804), and/or wherein the stationary first linear guide element (801) and the stationary bearing portion (804) are configured in one piece.

6. Portable multifunctional tool (10) as claimed in any of the preceding claims, wherein a guide portion (820) having a first running surface (821) is arranged between the stationary first linear guide element (801) and the stationary bearing portion (804), and wherein the force exertion means (101, 201; 102, 202) arranged on the second linear guide element (802) comprises a second running surface (822) complementary to the former, the two running surfaces (821, 822) supporting the force exertion means (101, 201; 102, 202), upon a linear movement (103, 104), against rotation about the longitudinal axis (805) extending in the direction of movement (103, 104).

7. Portable multifunctional tool (10) as claimed in any of the preceding claims, wherein the accommodating portion (211, 212) and/or the engagement portion (213, 214) has a thickness (d) of between 1 mm and 2 mm which is to be measured in a direction orthogonal to the linear movement direction.

8. Portable multifunctional tool (10) as claimed in any of the preceding claims, wherein the accommodating portion (211, 212) comprises a contact portion (215, 216) which can be brought into contact with a chain link plate connection means (1001B, 1002B; 504, 509) of a quick release chain fastener (502, 1000), said contact portion (215, 216) comprising a radius (R₁, R₂) essentially corresponding to the radius of the chain link plate connection means (1001B, 1002B; 504, 509), and/or wherein the radius (R₁, R₂) is between 3.5 mm and 4.0 mm, preferably between 3.7 mm and 3.9 mm, and more preferably 3.8 mm.

9. Multifunctional tool (10) as claimed in any of the preceding claims, wherein the tool accommodating portion (12) comprises a bolt (13) extending transversely to a main extension direction (X₁) of the handle portion (11), and wherein the at least one tool function element (100, 200) is arranged on said bolt (13), and/or wherein the at least one tool function element (100, 200) comprises a mounting portion (901) by means of which the tool function element (100, 200) is arranged on the bolt (13), said mounting portion (901) comprising an opening (903) through which the bolt (13) can be passed.

10. Multifunctional tool (10) as claimed in any of the preceding claims, wherein the at least one tool function element (100, 200) is rotatably arranged on the tool accommodating portion (12).

11. Multifunctional tool (10) as claimed as claimed in any of the preceding claims, wherein the tool accommodating portion (12) is bipartite (12a, 12b) and the mounting portion (901) of the at least one tool function element (100, 200) is arranged between the two parts (12a, 12b) of the tool accommodating portion (12).

12. Multifunctional tool (10) as claimed in any of the preceding claims, wherein the handle portion (11) is bipartite, the first part (11a) of the handle portion (11) being configured in one piece with a first part (12a) of the tool accommodating portion (12), and the second part (11b) of the handle portion (11) being configured in one piece with a second part (12b) of the tool accommodating portion (12).

13. Multifunctional tool (10) as claimed in any of the preceding claims, the multifunctional tool (10) comprising a second tool accommodating portion (14) arranged opposite the first tool accommodating portion (12).

14. Multifunctional tool (10) as claimed in claim 13, wherein the first and second tool accommodating portions (12, 14) comprise a common sectional axis (16) extending in parallel with the main extension direction (X₁) of the handle portion (11), or wherein the first and second tool accommodating portions (12, 14) comprise a common sectional axis (16) extending transversely to the main extension direction (X₁) of the handle portion (11) and through the center (18) of the handle portion (11).

## Revendications

1. Outil multifonction portable (10) avec
un segment de poignée (11) et un segment de réception d'outil (12) sur lequel est disposé au moins un élément de fonction d'outil (100, 200),
dans lequel l'élément de fonction d'outil (100, 200) est conçu pour actionner une fermeture rapide de type chaîne (502, 1000) avec deux plaques de chaîne (1001A, 1002A) et deux moyens de connexion de plaque de chaîne (1001B, 1002B), et dans lequel l'élément de fonction d'outil (100, 200) présente:
un premier moyen d'application de force (101, 201) qui est réalisé pour exercer une force (F₁, F₂) sur le premier moyen de connexion de plaque de chaîne (1001B) de la fermeture rapide de type chaîne (502, 1000), et
un deuxième moyen d'application de force (102, 202) qui est réalisé pour exercer une force (F₁, F₂) sur le deuxième moyen de connexion de plaque de chaîne (1002B) de la fermeture rapide de type chaîne (502, 1000),
dans lequel le premier moyen d'application de force (101, 201) et le deuxième moyen d'application de force (102, 202) peuvent se déplacer en translation l'un par rapport à l'autre pour actionner la fermeture rapide de type chaîne (502, 1000) au moyen de ce mouvement de translation,
dans lequel l'élément de fonction d'outil (100, 200) présente un dispositif de guidage linéaire (801, 802) avec un premier élément de guidage linéaire stationnaire (801) et un deuxième élément de guidage linéaire (802) disposé de manière déplaçable dans ce dernier, dans lequel seul un des deux moyens d'application de force (101, 201; 102, 202) est disposé sur le deuxième élément de guidage linéaire (802),
dans lequel au moins un des deux moyens d'application de force (101, 102; 201, 202) présente un segment de réception (211, 212) destiné à recevoir la fermeture rapide de type chaîne (502, 1000), dans lequel le segment de réception (211, 212) est conçu pour éviter un basculement (602) de la fermeture rapide de type chaîne (502, 1000) le long de l'axe longitudinal de la chaîne (601),
dans lequel le segment de réception (211, 212) présente un segment de venue en prise (213, 214) qui est conçu pour venir en prise entre deux plaques de chaîne (505, 506; 507, 508) d'un maillon de chaîne (501, 503) adjacent à la fermeture rapide de type chaîne (502, 1000) lorsque la fermeture rapide de type chaîne (502, 1000) est disposée dans une chaîne (500), et
dans lequel l'élément de fonction d'outil (100, 200) présente par ailleurs une tige de poussée de rivet (904) destinée à ouvrir et riveter une chaîne rivetée (500A).

2. Outil multifonction portable (10) selon la revendication 1, dans lequel l'un des deux moyens d'application de force (101, 201; 102, 202) est couplé en déplacement au deuxième élément de guidage linéaire (802), de sorte que le deuxième élément de guidage linéaire (802) et le moyen d'application de force (101, 201; 102, 202) disposé sur ce dernier se déplacent ensemble dans la même direction.

3. Outil multifonction portable (10) selon la revendication 1 ou 2, dans lequel le deuxième élément de guidage linéaire (802) et le moyen d'application de force (101, 201; 102, 202) disposé sur ce dernier se déplacent ensemble sur l'autre moyen d'application de force (101, 201; 102, 202) respectif.

4. Outil multifonction portable (10) selon l'une des revendications précédentes, dans lequel le deuxième élément de guidage linéaire (802) est déplaçable dans une première direction (103) pour ouvrir la fermeture rapide de type chaîne (502, 1000), et le moyen d'application de force (101, 201; 102, 202) disposé sur le deuxième élément de guidage linéaire (802) est disposé, dans cette première direction de déplacement (103), devant le premier élément de guidage linéaire (801).

5. Outil multifonction portable (10) selon l'une des revendications précédentes, dans lequel l'élément de fonction d'outil (100, 200) présente un segment de palier stationnaire (804) sur lequel est monté l'autre respectif des deux moyens d'application de force (102, 202), dans lequel le segment de palier (804) est disposé distant du premier élément de guidage linéaire (801) et en regard de ce dernier dans la direction de déplacement (103, 104) du deuxième élément de guidage linéaire (802), et/ou dans lequel le deuxième élément de guidage linéaire (802) présente un segment fileté qui s'étend à travers le premier élément de guidage linéaire (801) et ne s'étend pas à travers le segment de palier stationnaire (804), et/ou dans lequel le premier élément de guidage linéaire stationnaire (801) et le segment de palier stationnaire (804) sont réalisés d'une seule pièce.

6. Outil multifonction portable (10) selon l'une des revendications précédentes, dans lequel est formé, entre le premier élément de guidage linéaire stationnaire (801) et le segment de palier stationnaire (804), un segment de guidage (820) qui présente une première surface de roulement (821), et dans lequel moyen d'application de force disposé (101, 201; 102, 202) sur le deuxième élément de guidage linéaire (802) présente une deuxième surface de roulement (822) complémentaire à cette dernière, dans lequel les deux surfaces de roulement (821, 822) protègent le moyen d'application de force (101, 201; 102, 202), lors d'un déplacement linéaire (103, 104), contre une rotation autour de l'axe longitudinal (805) s'étendant dans la direction de déplacement (103, 104).

7. Outil multifonction portable (10) selon l'une des revendications précédentes, dans lequel le segment de réception (211, 212) et/ou le segment de venue en prise (213, 214) présentent une épaisseur (d) comprise entre 1 mm et 2 mm, à mesurer orthogonalement à la direction de déplacement linéaire.

8. Outil multifonction portable (10) selon l'une des revendications précédentes, dans lequel le segment de réception (211, 212) présente un segment de contact (215, 216) qui peut être amené en contact avec un moyen de connexion de plaque de chaîne (1001B, 1002B; 504, 509) d'une fermeture rapide de type chaîne (502, 1000), dans lequel le segment de contact (215, 216) présente un rayon (R₁, R₂) qui correspond sensiblement au rayon du moyen de connexion de plaque de chaîne (1001B, 1002B; 504, 509), et/ou dans lequel le rayon (Ri, R₂) est compris entre 3,5 mm et 4,0 mm, de préférence entre 3,7 mm et 3,9 mm, et est plus préférentiellement de 3,8 mm.

9. Outil multifonction (10) selon l'une des revendications précédentes, dans lequel le segment de réception d'outil (12) présente un boulon (13) qui s'étend de manière transversale à une direction principale d'extension (Xi) du segment de poignée (11), et dans lequel l'au moins un élément de fonction d'outil (100, 200) est disposé sur ce boulon (13), et/ou dans lequel l'au moins un élément de fonction d'outil (100, 200) présente un segment de fixation (901) au moyen duquel l'élément de fonction d'outil (100, 200) est fixé au boulon (13), dans lequel le segment de fixation (901) présente une ouverture (903) à travers laquelle peut être passé le boulon (13).

10. Outil multifonction (10) selon l'une des revendications précédentes, dans lequel l'au moins un élément de fonction d'outil (100, 200) est disposé de manière rotative sur le segment de réception d'outil (12).

11. Outil multifonction (10) selon l'une des revendications précédentes, dans lequel le segment de réception d'outil (12) est divisé en deux parties (12a, 12b) et le segment de fixation (901) de l'au moins un élément de fonction d'outil (100, 200) est disposé entre les deux parties (12a, 12b) du segment de réception d'outil (12).

12. Outil multifonction (10) selon l'une des revendications précédentes, dans lequel le segment de poignée (11) est divisé en deux parties, dans lequel la première partie (11a) du segment de poignée (11) est formée d'une seule pièce avec une première partie (12a) du segment de réception d'outil (12) et la deuxième partie (11b) du segment de poignée (11) est formée d'une seule pièce avec une deuxième partie (12b) du segment de réception d'outil (12).

13. Outil multifonction (10) selon l'une des revendications précédentes, dans lequel l'outil multifonction (10) présente un deuxième segment de réception d'outil (14) qui est disposé en regard du premier segment de réception d'outil (12).

14. Outil multifonction (10) selon la revendication 13, dans lequel le premier et le deuxième segment de réception d'outil (12, 14) présentent un axe de coupe commun (16) qui s'étend de manière parallèle à la direction principale d'extension (X₁) du segment de poignée (11), ou dans lequel le premier et le deuxième segment de réception d'outil (12, 14) présentent un axe de coupe commun (16) qui s'étend de manière oblique par rapport à la direction principale d'extension (Xi) du segment de poignée (11) et à travers le centre (18) du segment de poignée (11).
